# NOUVEAU FASCICULE DE BREVET EUROPEEN

(11) **EP 2 601 429 B2**
(45) Date de publication et mention de la décision concernant l'opposition: **22.05.2024**
(45) Mention de la délivrance du brevet: 30.04.2014
(21) Numéro de dépôt: 11752284.7
(22) Date de dépôt: 25.07.2011
(51) Int. Cl.: B29C 65/00, B29C 65/34, B29C 65/48, B29C 57/00, F16L 58/18, F16L 1/15, F16L 1/20, F16L 13/02, F16L 47/03

(54) **MANCHON TUBULAIRE DE JONCTION EN MATIERE PLASTIQUE POUR CONDUITE COMPORTANT UN CHEMISAGE INTERNE**
ROHRFÖRMIGE KUNSTSTOFFVERBINDUNGSMUFFE FÜR EIN ROHR MIT INNENAUSKLEIDUNG
PLASTIC TUBULAR CONNECTING SLEEVE FOR A PIPE WITH INTERNAL LINER

(30) Priorité: 06.08.2010 FR 1056488
(43) Date de publication de la demande: 12.06.2013
(73) Titulaire: Saipem SA, 78180 Montigny-le-Bretonneux (FR)
(72) Inventeur: PIONETTI, François-Régis, F-50450 La Baleine (FR); ROCHER, Xavier, F-78400 Chatou (FR)
(74) Mandataire: Cabinet Beau de Loménie
(86) Numéro de dépôt international: PCT/FR2011/051783
(87) Numéro de publication internationale: WO 2012/017171

(56) Documents cités:
- EP-A1- 0 382 971
- WO-A1-97/01433
- DE-C1- 3 411 179
- GB-A- 809 560
- GB-A- 862 782
- GB-A- 862 782
- NL-A- 6 412 575
- US-A- 4 176 274
- US-A- 5 500 510
- US-A- 5 500 510
- US-A- 5 779 843
- US-A1- 2010 101 718

## Description

La présente invention concerne une conduite réalisée par assemblage d'éléments de conduite en acier, comportant un chemisage interne en matière plastique protégeant les parois en acier de ladite conduite de la corrosion.

La présente invention concerne plus particulièrement des conduites véhiculant des fluides corrosifs, notamment des conduites sous-marines véhiculant de l'eau de mer sous pression destinée à être injectée dans des puits de champs pétroliers, et plus particulièrement encore des conduites de liaison fond/surface.

La présente invention concerne plus particulièrement, le raccordement de deux éléments unitaires de conduite à chemisage interne, et plus particulièrement encore d'éléments de 24 m ou 48 m de longueur installées sur des champs pétrolifères en mer profonde, par 2000 à 3000 m, voire plus, à partir de navire de pose équipés de tours de pose en J.

De façon connue, les extrémités desdits éléments de conduite sont assemblés bout à bout par soudage et le chemisage interne à l'intérieur desdits éléments de conduite s'arrêtent à une distance significative, par exemple 100 à 200 mm de l'extrémité desdits éléments de conduite, de manière à ce que l'échauffement de la paroi en acier lors du soudage de leurs extrémités, ne vienne pas endommager ladite chemise. Le problème qui se pose alors est d'assurer la protection contre la corrosion de la zone non chemisée comprise entre l'extrémité de la chemise de l'élément de conduite N et l'extrémité de la chemise de l'élément de conduite suivant N+1.

On connaît le brevet WO 2010/041016 ou le brevet WO 2006/042925 de la demanderesse qui décrit un tel assemblage de conduites revêtues de chemisage interne. La méthode de chemisage interne dite de "Swagelining" consiste à étirer une conduite circulaire en matériau souple, appelée ci-après "chemise", de manière à réduire son diamètre pour pouvoir l'insérer dans une conduite par tirage, le diamètre au repos de ladite chemise étant supérieur au diamètre interne de ladite conduite. Une autre manière pour insérer une telle chemise est de la déformer en la pliant pour obtenir une section transversale en forme de "haricot" qui s'inscrit alors dans un cercle de diamètre beaucoup plus faible et autorise de ce fait l'insertion par simple tirage à travers la conduite en acier. En fin de tirage, les extrémités débordant largement reprennent naturellement une forme sensiblement circulaire et il est simple d'y ajuster un bouchon. En pressurisant la chemise à l'air comprimé, celle-ci reprend sa forme circulaire et ladite chemise vient se plaquer fermement sur la paroi interne de la conduite acier.

Dans ce brevet WO 2006/042925, on décrit un mode d'assemblage entre deux éléments de conduite dans lequel un manchon tubulaire de jonction en acier résistant à la corrosion ou matériau composite assure la continuité de la protection des parois de conduite aux extrémités non chemisées desdits éléments de conduite. Plus particulièrement, on décrit un manchon tubulaire de jonction consistant en une virole en alliage résistant à la corrosion sous forme de manchon tubulaire à surface interne de révolution crantée aux extrémités et enfoncé de force dans chacune des extrémités desdits éléments de conduite à assembler de manière à créer une continuité et une étanchéité accrue de la chemise interne au niveau de la jonction des deux éléments de conduite.

Le terme "chemise" ou « chemisage interne » utilisé ci-après correspond à un revêtement aussi connu dans le métier sous la dénomination de "liner".

Cette étanchéité du contact manchon/chemise est importante pour éviter tout contact entre l'eau de mer et la zone de la soudure en vis-à-vis dudit manchon tubulaire.

Un tel contact direct pourrait en effet conduire, en cas de pénétration d'eau entre le manchon et la conduite, lorsque la conduite est une conduite d'injection d'eau, à des phénomènes électrochimiques de corrosion de la conduite en acier et de la soudure dans la mesure où ladite liaison mécanique entre le manchon et le chemisage n'est pas nécessairement étanche.

D'autres modes d'assemblage entre éléments de conduite ou entre rames ont été décrits dans de nombreux brevets mentionnés dans WO 2006/042925.

Le principal inconvénient des diverses méthodes d'assemblage entre rames réside dans le fait que la jonction est hétérogène entre un élément de raccordement métallique et une chemise en matériau thermoplastique et qu'elle est basée sur un principe de compression du matériau thermoplastique de la chemise, ce dernier pouvant être sujet, à long terme, à un fluage qui aurait pour conséquence d'engendrer des fuites si l'étanchéité entre l'extrémité du chemisage et l'extrémité du manchon est affectée, ce qui va à l'encontre du but recherché. De plus, ce phénomène est amplifié dans le cas des conduite de liaison fond-surface de type caténaire, car ces dernières sont en permanence en mouvement sous l'effet de la houle, du vent et des courants s'exerçant sur le support flottant ancré en surface, ce qui crée des micro-mouvements au niveau de chacun des éléments de raccordement, ces derniers étant en général espacés de la longueur d'une rame, c'est-à-dire en général tous les 24 ou 48m.

Dans WO 2006/042925, un crantage des extrémités du chemisage crée une compression qui coopère avec un crantage des extrémités du manchon pour compenser ce fluage.

On connait un manchon tubulaire de jonction et une conduite comprenant au moins 2 éléments de conduite en acier à chemisage interne en matériau thermoplastique assemblés bout à bout, les extrémités des deux éléments de conduite étant soudées l'une à l'autre, dans laquelle :
- ledit manchon tubulaire de jonction réalisé en matériau thermoplastique, de préférence identique à celui dudit chemisage, est intercalé à l'intérieur de la conduite au niveau des extrémités bout à bout des deux éléments de conduite, de manière à ce que les parties terminales aux extrémités dudit manchon sont, en partie au moins, en contact étanche respectivement avec des parties terminales aux extrémités desdits chemisages internes des deux éléments de conduite, et
- ledit manchon tubulaire de jonction présente à chacune des dites parties terminales du manchon au niveau de ladite zone de contact étanche avec les parties terminales desdits chemisages un dit fil chauffant par effet joule, disposé en spirale en surface externe de chaque dite partie terminale aux extrémités dudit manchon, ladite zone de contact étanche étant une zone de soudure par fusion entre elles des matières constitutives de chaque dite partie terminale du manchon et respectivement chaque dite partie terminale de dit chemisage en contact l'une avec l'autre et parcourues par ledit fil chauffant.

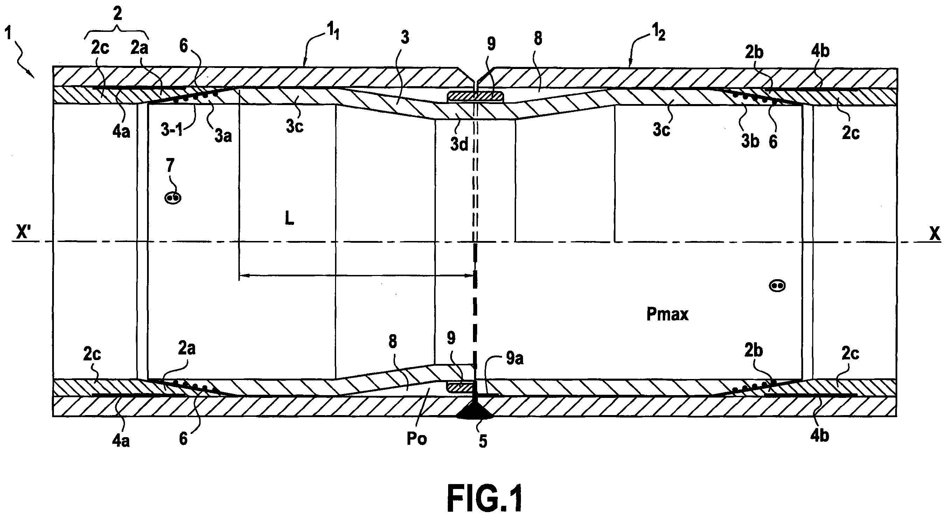

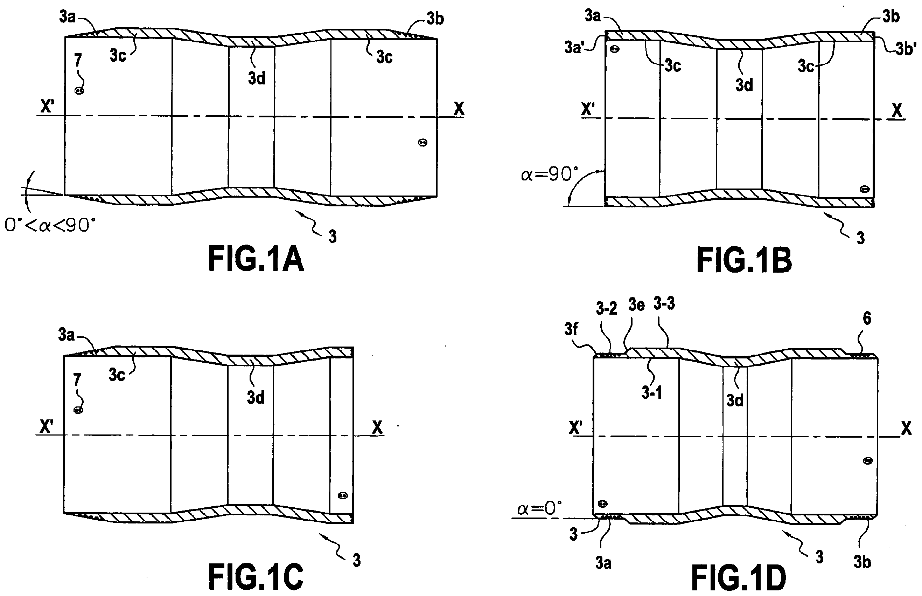

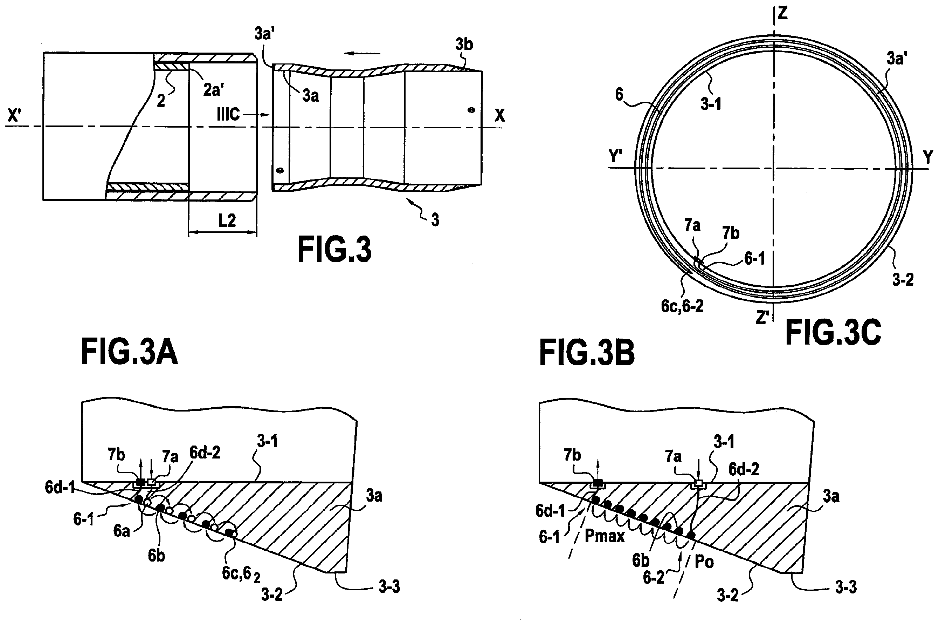

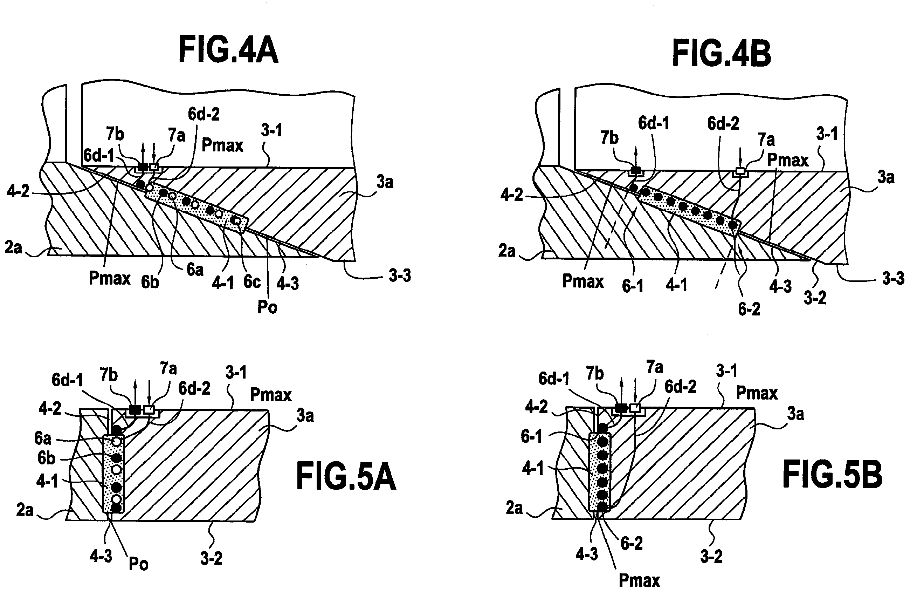

Mais, une conduite de ce type et un manchon tubulaire de jonction comportant un fil chauffant spiralé simple brin tel que décrit dans les figures 3B et 4B de la présente description, dans lesquelles les deux extrémités du fil simple brin spiralé débouchent de part et d'autre de la spirale sur la surface interne du manchon aux deux extrémités de ladite zone d'électrofusion aux zones étanches, peut donner lieu à des problèmes de perte d'étanchéité représentant un risque de contact avec de l'eau de ladite soudure métallique assurant la jonction entre les deux éléments de conduite, lorsque ladite conduite véhicule de l'eau. Il en résulte aussi et surtout que ledit manchon risque de se déformer, et notamment reprendre, le cas échéant, sa forme initiale de diamètre interne réduit dans sa zone centrale en vis-à-vis de la soudure métallique des extrémités des deux éléments de conduite bout à bout, comme représenté sur la gauche de la figure 1 ; car, en raison de la dite fuite, la zone 8 entre la surface externe du manchon et la surface interne desdits éléments de conduite se trouverait alors à une pression sensiblement identique à celle régnant à l'intérieur dudit manchon, et de par l'élasticité propre dudit manchon, ce dernier reprendrait naturellement sa forme initiale. Ce risque de perte d'étanchéité intervient pour les raisons explicitées ci-après.

Tout d'abord, il n'y a pas de garantie d'étanchéité à travers l'épaisseur de la partie terminale du manchon le long du canal pré-percé emprunté par une extrémité libre non spiralée du fil chauffant pour traverser ledit manchon dans son épaisseur depuis les première et deuxième extrémités de la spirale jusqu'à la surface interne du manchon. D'autre part, la zone de contact étanche obtenue par électrofusion ou zone de soudure par fusion ne recouvre pas la totalité de la surface de contact entre lesdites parties terminales du manchon et respectivement de ladite chemise interne, notamment la fusion n'est pas réalisée avec un niveau de fiabilité acceptable au niveau des première et dernière spires de la spirale, car l'apport calorifique est parfaitement contrôlé entre deux spires adjacentes mais pas en deçà de la première, ni au-delà de la dernière. Ainsi, dans le cas où ledit fil chauffant recouvre une surface externe de révolution notamment cylindrique ou tronconique, l'interface entre les parties terminales du manchon et respectivement dudit chemisage n'est pas étanche en dehors de la zone électro fondue, c'est à dire en deçà de la première spire, ni au-delà de la dernière spire. Ainsi, le canal de l'extrémité du fil au niveau de la première extrémité de la spirale la plus proche de l'extrémité la plus proche du manchon, accède à la partie non étanche de cette interface qui s'étend en deçà de ladite première extrémité de spirale, laquelle débouche uniquement sur les surfaces internes de la conduite et du manchon. En revanche, le canal de l'extrémité du fil au niveau de la deuxième extrémité de la spire la plus proche de la partie courante du manchon, accède à la partie de cette interface non étanche qui s'étend au-delà de ladite deuxième extrémité de spirale débouchant uniquement sur la surface externe du manchon et pouvant donner accès à ladite soudure. Dès lors, si l'une des extrémités libres non spiralées du fil part de la deuxième extrémité de spirale pour rejoindre la surface interne du manchon, un fluide sous pression, notamment de l'eau, véhiculé par la conduite, notamment à des pressions de service supérieure à 5 MPa, comme c'est le cas, pourra présenter un grand risque de cheminement le long dudit fil à travers l'épaisseur du manchon jusqu'à cette deuxième extrémité puis jusqu'à ladite soudure à travers ladite interface s'étendant entre ladite deuxième extrémité de spirale et la surface externe de la partie courante du manchon.

Dans WO 2010/041016 et EP 722 824 on a proposé un manchon tubulaire de jonction comprenant un fil chauffant spiralé sur sa surface externe pour lequel le problème d'étanchéité de la soudure métallique résultant de fuites au niveau du canal ou sillon de passage du fil chauffant dans la masse du manchon est résolu.

Dans EP 722 824, on a résolu le problème d'étanchéité en faisant déboucher l'extrémité du fil du côté de la zone d'électrofusion le plus proche de la soudure sur la surface externe du manchon au niveau d'un renfoncement central, celui-ci étant destiné à être bouché par un matériau isolant après électrofusion et avant réalisation de la soudure métallique. Dans EP 722 824, il est donc requis de réaliser la soudure métallique après l'électrofusion au niveau du manchon et ladite électrofusion ne peut pas se faire exclusivement depuis l'intérieur dudit manchon et donc de ladite conduite.

Dans le document WO 2010/041016, tel que cela est montré sur la figure 1, on met en oeuvre un fil chauffant disposé en deux parties hélicoïdales espacées l'une de l'autre, les extrémités les plus éloignées l'une de l'autre des deux parties hélicoïdales étant reliées entre elles et les deux extrémités du fil chauffant débouchant sur la surface interne du manchon du côté de l'espace entre les deux parties hélicoïdales. Ainsi, après électrofusion il y a toujours une zone d'électrofusion étanche entre la soudure métallique et les deux extrémités libres du fil chauffant débouchant sur la surface interne du manchon. Ce mode de réalisation requiert un usinage du manchon et une dépose du fil chauffant relativement plus élaborée et délicate à réaliser.

Un but de la présente invention est de fournir un nouveau mode d'assemblage amélioré de deux éléments de conduite en acier revêtues de chemisage interne à l'aide d'un manchon tubulaire de jonction, qui soit à la fois davantage fiable mécaniquement en termes d'étanchéité tout en étant simple et peu coûteux à réaliser, notamment dans le cas d'un assemblage, sur site à partir d'un navire en mer, d'éléments de conduite de longueur réduite adaptés à la pose à partir d'un navire en mer.

Un autre but de la présente invention est de fournir des procédé et dispositif de chemisage et assemblage d'éléments de conduite qui requièrent un nombre minimal de pièces pour le raccordement des extrémités non chemisées des éléments de conduites à assembler et qui ne requièrent pas la mise en oeuvre d'outils spécifiques, tels que des outils de sertissage, lors de l'assemblage des deux éléments de conduite chemisée, ni des éléments coûteux en acier résistant à la corrosion.

Un autre but de la présente invention est de fournir des dispositif et procédé améliorés de chemisage et assemblage d'éléments de conduite destinés à réaliser des conduites aptes à être posées à grande profondeur et, plus particulièrement encore, des conduites aptes à servir à l'injection d'eau et, notamment, d'injection d'eau de mer.

Pour ce faire, la présente invention fournit un manchon tubulaire de jonction en matériau thermoplastique selon la revendication 1.

Ledit manchon tubulaire de jonction est apte à être inséré à l'intérieur de la conduite au niveau des extrémités bout à bout des deux éléments de conduite, de manière à ce que les parties terminales aux extrémités dudit manchon sont, en partie au moins, en contact étanche respectivement avec des parties terminales aux extrémités desdits chemisages internes des deux éléments de conduite. Et, ledit fil chauffant par effet joule est apte à créer par chauffage une dite zone de contact étanche par fusion entre elles des matières constitutives d'une partie au moins de chaque dite partie terminale du manchon et respectivement chaque dite partie terminale de dit chemisage en contact l'une avec l'autre, et parcourues par ledit fil chauffant.

La présente invention fournit donc également une conduite comprenant au moins 2 éléments de conduite en acier à chemisage interne en matériau thermoplastique assemblés bout à bout, dont les extrémités des deux éléments de conduite sont soudées l'une à l'autre, dans laquelle un dit manchon tubulaire de jonction selon l'invention est intercalé à l'intérieur de la conduite au niveau des extrémités bout à bout des deux éléments de conduite, de manière à ce que les parties terminales aux extrémités dudit manchon sont, en partie au moins, en contact étanche respectivement avec des parties terminales aux extrémités desdits chemisages internes des deux éléments de conduite, et ladite zone de contact étanche étant une zone de soudure par fusion entre elles des matières constitutives de chaque dite partie terminale du manchon parcourue par ledit fil chauffant, et respectivement chaque dite partie terminale de dit chemisage en contact l'une avec l'autre.

On entend ici par "interne" et "externe", interne et respectivement externe à la conduite, au manchon ou au chemisage selon les cas.

On comprend qu'on entend ici par « partie courante du manchon » la partie centrale du manchon située entre les deux parties terminales aux deux extrémités longitudinales du manchon.

Comme explicité ci-après, lesdites parties terminales du manchon du chemisage sont en contact l'une avec l'autre, au niveau des surfaces annulaires planes des extrémités frontales à section droite desdites parties terminales du manchon et dudit chemisage. Lesdites surfaces de révolution desdites parties terminales du manchon et de chemisage présentent le même axe de révolution que ladite conduite.

Ladite zone de contact étanche s'étend sur tout le pourtour des surfaces de révolution externes desdites parties terminales du manchon et desdites surfaces de révolution internes desdites parties terminales du chemisage en contact l'une avec l'autre, c'est-à-dire sur 360° autour de leur axe de révolution XX'. En revanche, ladite zone de contact étanche peut s'étendre sur une partie simplement des longueurs dans la direction axiale desdites surfaces de révolution des parties terminales de manchon et chemisage en contact l'une avec l'autre.

On comprend que lesdites surfaces de révolution desdites parties terminales du manchon et du chemisage présentent le même axe de révolution que ladite conduite et que ledit manchon en position à l'intérieur de ladite conduite.

De façon connue, chaque dit élément de conduite comprend un chemisage interne en matériau plastique, de préférence thermoplastique, se terminant à une certaine distance L de l'extrémité du dit élément de conduite, de préférence une partie au moins de la surface externe de chaque partie terminale aux extrémités du chemisage interne étant verrouillée par collage contre la surface interne correspondante de la paroi en acier de la conduite, à l'aide d'une colle de préférence du type époxy ou polyuréthane.

De façon connue encore, le manchon s'étend dans une direction longitudinale axiale XX' et de la conduite sur une longueur recouvrant au moins les longueurs de conduite non recouvertes de dits chemisages, c'est-à-dire au moins 2 fois ladite distance L.

Une telle conduite chemisée ne présente pas de discontinuité de matière au niveau du raccordement des deux éléments de conduites successifs sur sa surface interne. On comprend que ladite zone de fusion est obtenue par alimentation électrique dudit fil chauffant par effet joule intercalé au niveau de l'interface desdites surfaces de contact des parties terminales du manchon et du chemisage. Ladite zone de soudure par fusion, (ci-après en abrégé « zone de fusion ») fusion est donc réalisée dans ce cas par le procédé connu dit « électrofusion », qui permet de réaliser une zone de contact étanche particulièrement fiable et résistante d'une part, et d'autre part, particulièrement aisée à réaliser dans le cadre de l'application entre lesdits manchons et chemisage de conduite selon l'invention.

On comprend que le fil chauffant double spirale par effet joule doit parcourir la surface dudit manchon sans se croiser, de manière à éviter les courts-circuits électriques.

On comprend que la surface externe de la partie courante du manchon adjacente à ladite partie terminale de manchon est située en vis-à-vis des parties des parois internes des extrémités desdits éléments de conduite assemblées non recouvertes de dit chemisage.

Selon la présente invention, on met en oeuvre un fil chauffant enroulé en double spirale tel que défini ci-dessus, les deux extrémités libres (non spiralées) du fil étant situées du même côté de la double spirale, pour rejoindre la surface interne du manchon au plus près de la dite surface interne. Ainsi, dans le cas où le fil est mis en oeuvre sur une surface externe de révolution comme défini ci-après, il est possible de mettre en oeuvre un fil chauffant dont les deux extrémités libres sont situées du même côté de la zone d'électrofusion, à savoir le côté opposé par rapport à ladite soudure métallique. Ainsi, un fluide sous pression ne pourra pas accéder à ladite soudure métallique en cheminant à travers l'épaisseur du manchon jusqu'à la zone de fusion, mais pourra uniquement cheminer dans l'interface entre la zone de contact étanche ou zone de fusion et l'intérieur de la conduite.

Le mode de réalisation selon la présente invention avec un fil chauffant roulé en double spirale est avantageux en ce qu'il permet d'assurer une étanchéité plus complète et plus fiable de la surface de contact entre lesdites parties terminales du manchon et du chemisage afin d'éviter tout risque de contact de ladite soudure avec l'eau lorsque ladite conduite véhicule de l'eau et ainsi éviter tout risque d'envahissement de la zone située entre la surface externe du manchon et la surface interne desdits éléments de conduite, ce qui ne manquerait pas de créer un rétrécissement du diamètre interne du manchon, c'est-à-dire de la section de passage du fluide, et donc des perturbations dans l'écoulement du fluide à l'intérieur du manchon, sans compter le risque de contact de ladite soudure avec l'eau, lorsque ladite conduite véhicule de l'eau.

En effet, du fait que les deux extrémités libres non spiralées du fil partent de la première extrémité de la double spirale du côté de la partie de l'interface non étanche débouchant uniquement sur la surface interne du manchon, un fluide sous pression, ne pourra pas cheminer à travers l'épaisseur du manchon jusqu'à la deuxième extrémité et ne pourra pas accéder à ladite soudure, mais pourra uniquement cheminer dans l'interface et dans les canaux des extrémités du fil entre lesdites premières extrémités de la double spirale et l'intérieur de la conduite.

La solution d'étanchéité selon la présente invention est plus simple et moins coûteuse à réaliser que le mode de réalisation des documents WO 2010/041016 et EP 722 824, mais surtout présente les avantages additionnels suivants.

Un avantage de ce mode de réalisation à double spirales dont les deux extrémités libres du fil débouchent du même côté de la zone de fusion, est que les deux spirales, lorsqu'elles sont parcourues par le courant électrique d'alimentation lors de la réalisation de l'électrofusion, induisent des champs magnétiques de sens opposés et dont la résultante est nulle, ce qui permet d'éviter de perturber le courant d'alimentation du fil chauffant lors de la réalisation de l'électrofusion et permet donc de réaliser une électrofusion plus uniforme et plus régulière dans toute la zone.

Un autre avantage du mode de réalisation dans lequel les deux extrémités de la spirale débouchent du même côté de ladite zone de fusion est qu'il est possible de mettre en oeuvre un manchon dénommé ici « manchon rétreint », c'est-à-dire un manchon présentant initialement au moins dans une partie centrale de diamètre externe réduit inférieur aux diamètres externes de ses parties courantes adjacentes à ladite partie centrale de manière à ménager un espace annulaire, dans lequel on peut placer une pièce annulaire de protection thermique du manchon lors du soudage des extrémités des éléments de conduite comme il sera explicité ci-après, lesdites parties courantes du manchon présentant de préférence un diamètre externe légèrement inférieur au diamètre interne des extrémités non recouvertes dudit chemisage des éléments de conduite assemblées.

Ledit manchon peut être préfabriqué avec un dit fil chauffant déjà appliqué à sa surface, ce qui est plus facile à réaliser que l'application in situ à l'intérieur desdits éléments de conduite d'un fil chauffant appliqué en surface desdits chemisages internes de l'élément de conduite in situ à l'intérieur de la conduite avant l'insertion dudit manchon à l'intérieur dudit élément de conduite.

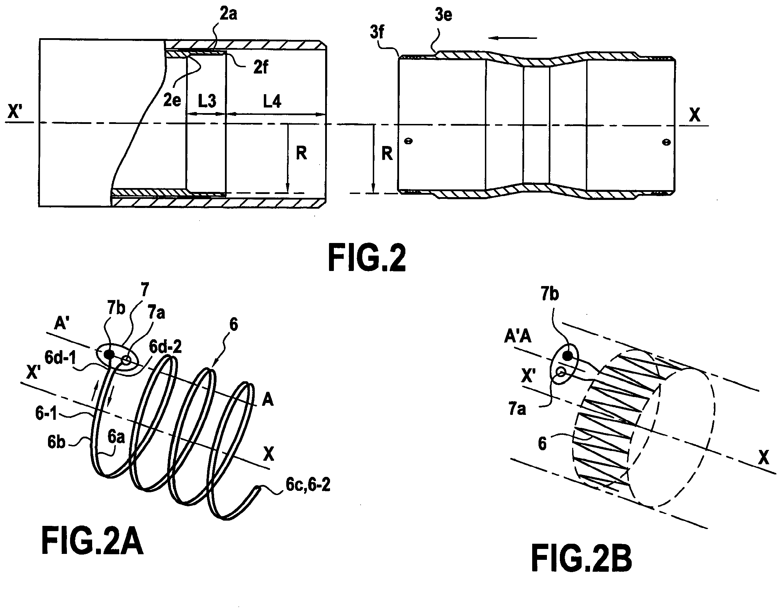

Dans un autre mode de réalisation, le fil chauffant n'est pas appliqué en spirale, c'est-à-dire ne réalise pas une pluralité de spires disposées successivement dans la direction de leur axe de révolution pour parcourir ladite zone de fusion, mais ledit fil réalise au moins un tour autour dudit axe de révolution de la zone de fusion en réalisant une pluralité d'aller et venues entre les deux extrémités de ladite zone de fusion dans ladite direction axiale de révolution de révolution de ladite zone de fusion, comme représenté figure 2B.

Le fait que ledit fil chauffant présente de préférence des bornes à ses extrémités débouchant sur la surface interne dudit manchon est avantageux en ce qu'il permet de réaliser plus aisément l'alimentation électrique du fil depuis l'intérieur de la conduite lors de l'assemblage de la conduite comme explicité ci-après.

On comprend que les parties terminales aux extrémités du manchon présentent des surfaces de formes identiques ou complémentaires aux surfaces des parties terminales aux extrémités desdits chemisages avec lesquelles elles sont en contact.

Selon une première variante de réalisation, la paroi du manchon au niveau d'au moins unes dite partie terminale du manchon est sensiblement de même épaisseur que celle de la partie courante adjacente du manchon en vis-à-vis de la conduite non chemisée, et sensiblement de même épaisseur que celle d'une dite partie terminale dudit chemisage et que celle de la partie courante adjacente dudit chemisage, ladite zone de soudure par fusion étant située au niveau des extrémités frontales droites du manchon et dit chemisage en butée l'une contre l'autre.

On comprend que dites extrémités frontales droites forment des surfaces planes annulaires s'étendant dans une direction perpendiculaire à la direction longitudinale XX' du manchon et de la conduite et sont constituées par la tranche en section transversale droite desdites extrémités.

Dans ce mode de réalisation, la spirale formée par le fil chauffant est plane, et celle-ci progresse autour de ladite surface frontale ou tranche de l'extrémité du manchon de telle sorte que le diamètre de ses spires concentriques situées toute dans un même plan, augmente depuis sa dite première extrémité qui est la plus proche de la surface interne du manchon vers sa dite deuxième extrémité la plus proche de la surface externe adjacente du manchon située en vis-à-vis de la paroi interne de la conduite.

En cas de fil chauffant sous forme de double spirale, lesdites premières extrémités des deux spirales sont disposées du même côté de ladite zone de fusion, à savoir débouchant sur la surface interne dudit manchon.

La réalisation à extrémités frontales droites ci-dessus est particulièrement avantageuse dans le cas où l'épaisseur desdits chemisages et dits manchons en partie courante est de plus grande valeur, notamment supérieure à 10 mm.

Dans le mode de réalisation ci-dessus, la surface de contact présente une topologie de type cône fictif avec un demi angle au sommet α = 90°, de sorte que dans tous les cas ladite première extrémité de spirale est située du côté de la pointe du cône fictif.

Plus particulièrement, la conduite est une conduite de liaison soit reposant sur le fond de la mer, soit une liaison fond/surface apte à être posée en milieu sous-marin à grande profondeur, de préférence jusqu'à 3000 m, et lesdits éléments de conduite ont une longueur de 20 à 50 m, de diamètre interne de 10 à 60cm et ledit manchon présente une longueur de 45 à 150cm. Il s'agit plus particulièrement de conduite d'injection d'eau sous pression dans des puits de champs pétroliers, laquelle pression est toujours supérieure à 5MPa et plus particulièrement de 25 à 70 MPa (250 à 700 bars). Ce type de conduite comme rappelé ci-dessus est particulièrement sollicitée au niveau desdites soudures de sorte que celle-ci doivent être protégées au maximum de toute corrosion par contact avec l'eau de mer, surtout dans le cas de liaisons fond-surface, car dans ce cas la conduite est perpétuellement en mouvements en raison des effets de la houle du vent et du courant s'exerçant sur le support flottant en surface et de ce fait soumise à des contraintes de fatigue extrêmes.

Selon un autre aspect avantageux de la présente invention, ledit manchon est réalisé par assemblage par soudage par fusion, de préférence par électrofusion, des surfaces des extrémités en contact l'une avec l'autre d'au moins 2 parties tubulaires de dit manchon comprenant au moins :
- une première partie tubulaire de manchon comprenant une partie courante de manchon et une partie centrale de manchon de diamètre externe et de préférence de diamètre interne, de dimension(s) réduite(s) par rapport au diamètre externe, et de préférence respectivement diamètre interne, de la partie courante adjacente, de préférence encore ladite première partie tubulaire de manchon étant obtenue par usinage d'un manchon tubulaire de plus grande épaisseur, et
- au moins une deuxième partie tubulaire de manchon comprenant partie terminale tubulaire de manchon présentant de préférence une plus petite longueur que ladite première partie tubulaire dans la direction axiale XX' du manchon, et de préférence présentant une surface interne cylindrique, et de préférence encore, ladite deuxième partie de manchon étant obtenue par moulage, et
- les extrémités de deux dites première et deuxième parties tubulaires de manchon assemblées présentent des formes identiques ou complémentaires au niveau de leur zone de contact, dont une des dites surfaces au moins est recouverte d'un dit fil chauffant par effet joule, enroulé en double spirale, et dont les bornes d'extrémité débouchent de préférence encore sur la surface interne de ladite partie tubulaire de manchon.

Ce mode de réalisation comprenant plusieurs parties tubulaires de manchon est avantageux, car il permet de limiter la réalisation des pièces moulées à des pièces relativement de plus petite dimension, ce qui permet d'éviter de mettre en oeuvre des moules extrêmement coûteux de grande dimension.

De préférence, ledit manchon est constitué de l'assemblage par soudage par électrofusion d'une dite première partie tubulaire de manchon assemblée à chaque extrémité à une dit deuxième première partie tubulaire de manchon, chaque dite deuxième partie tubulaire de manchon comportant une extrémité libre comprenant une dite partie terminale de manchon.

La présente invention fournit également un procédé de réalisation d'une conduite selon l'invention, comprenant les étapes dans lesquelles :
1) on réalise l'assemblage d'éléments de conduites comprenant un dit chemisage avec une partie terminale d'épaisseur réduite à chaque extrémité, et un dit manchon tubulaire de jonction inséré à seulement une extrémité de chaque dit élément de conduite et dépassant de celle-ci, le dépassement dudit manchon définissant une extrémité mâle de chaque dit élément de conduite apte à être assemblée avec une extrémité dépourvue de dit manchon définissant une extrémité femelle d'un autre dit élément de conduite, en introduisant et insérant en force ladite extrémité femelle dépourvue de manchon tubulaire de jonction d'un élément de conduite à assembler autour de l'extrémité mâle comprenant un manchon tubulaire de jonction fixe qui dépasse de l'élément de conduite terminal d'une conduite en cours d'assemblage, dans la direction longitudinale (XX') axialement, jusqu'à ce que ladite partie terminale du manchon de la ladite extrémité mâle dudit élément de conduite terminal soit en contact avec la dite partie terminale du chemisage de ladite extrémité femelle dudit élément de conduite à assembler, chaque dit manchon comprenant sur chacune desdites parties terminales du manchon un dit fil chauffant par effet joule enroulé en double spirale, puis
2) on alimente le dit fil chauffant en électricité, de préférence en exerçant simultanément une pression de ladite partie terminale de manchon contre ladite partie terminale de chemisage en contact l'une avec l'autre, pour réaliser une dite zone de soudure par électrofusion au niveau d'une partie au moins de l'interface des surfaces de chaque dite partie terminale du manchon et chaque dite partie terminale de chemisage en contact l'une avec l'autre et parcourues par la double spirale de fil chauffant à la surface du manchon, pour réaliser une dite zone de contact étanche par fusion, et
3) on réalise le soudage des extrémités des deux éléments de conduite bout à bout.

De préférence, ledit manchon présente dans une partie centrale, un diamètre externe inférieur aux diamètres externes des parties courantes adjacentes à ladite partie centrale de manière à ménager un espace annulaire entre le manchon et la paroi desdits éléments de conduite, et on place une pièce annulaire de protection thermique apte à protéger le manchon lors du soudage des extrémités des éléments de conduite, lesdites parties courantes du manchon présentant de préférence un diamètre externe sensiblement identique au diamètre interne des extrémités non recouvertes du dit chemisage des éléments de conduite assemblées.

Ce mode de réalisation est particulièrement avantageux en ce qu'il permet de créer un espace annulaire de taille suffisante pour accueillir une dite pièce annulaire de protection thermique du manchon, laquelle empêchera la détérioration du manchon lors de la réalisation du soudage des extrémités en acier desdits éléments de conduite à assembler, protégeant ainsi le manchon sur sa surface externe en vis-à-vis desdites extrémités des éléments de conduite à souder entre elles.

De préférence encore, la paroi tubulaire dudit manchon présente une épaisseur sensiblement constante, dans ses dites parties courantes adjacentes, et sensiblement égale à l'épaisseur de la partie courante dudit chemisage interne, et la dite partie centrale du manchon, de préférence d'épaisseur réduite, est apte à se déformer pour adopter un diamètre interne sensiblement identique au diamètre interne du reste du manchon sous l'effet d'une pression interne du fluide circulant à l'intérieur de la conduite en opération d'au moins 1 MPa, et la pièce de protection thermique est elle-même aussi déformable dans les même conditions de pression de préférence pour adopter une épaisseur inférieure à 5mm de préférence encore inférieure à 2mm, ladite pièce de protection thermique étant de préférence encore constituée de fibres de céramique.

De préférence encore, on exerce ladite pression contre la surface interne du manchon au niveau de sa dite partie terminale en introduisant à l'intérieur du manchon un dispositif comprenant une cellule gonflable, initialement au moins partiellement dégonflée, de préférence ladite cellule comprenant ou coopérant à sa surface avec un connecteur électrique d'alimentation électrique que l'on positionne de telle sorte que ledit connecteur électrique de la cellule puisse coopérer avec le connecteur électrique sur la surface interne du manchon incluant les bornes du fil chauffant lorsque l'on gonfle ladite cellule, puis on gonfle ladite cellule.

La présente invention fournit également un élément de conduite utile dans un procédé de réalisation de conduite selon l'invention, ledit élément de conduite, comprenant un dit chemisage plastique avec une partie terminale d'épaisseur réduite se terminant à une certaine distance de chaque extrémité dudit élément de conduite, et un dit manchon tubulaire de jonction en matériau thermoplastique, dont une extrémité est insérée dans une des extrémités de l'élément de conduite et dont l'autre extrémité dépasse de l'élément de conduite, une partie terminale de l'extrémité dudit manchon insérée dans ledit élément de conduite étant en partie au moins en contact étanche avec une partie terminale dudit chemisage interne à l'extrémité de l'élément de conduite dans laquelle ledit manchon est inséré, caractérisé en ce que les surface externe de ladite partie terminale du manchon en contact avec ladite partie terminale dudit chemisage interne, et la surface externe de l'autre partie terminale de l'extrémité du manchon dépassant dudit élément de conduite, sont recouvertes d'un fil chauffant par effet joule, disposé en double spirale, de manière à pouvoir créer une dite zone de soudure par fusion par effet joule au niveau de l'interface entre lesdites parties terminales du manchon et parties terminales de dits chemisages d'éléments de conduites en contact ou destinées à être en contact les unes avec les autres.

Des procédés de réalisation d'éléments de chemisage interne d'éléments de conduite d'une part et d'assemblage des éléments de conduite vêtus d'un chemisage interne à l'aide d'un manchon tubulaire sont décrits dans WO 2006/042925 et trouveront à s'appliquer selon la présente invention, en particulier, on peut réaliser le chemisage interne avec un procédé comprenant les étapes suivantes comprenant :
1- ledit chemisage interne en introduisant, par une première extrémité d'un élément de conduite, une conduite en matériau thermoplastique souple et élastique en forme de conduite à section circulaire ou pliée en forme de haricot, destinée à former ladite chemise, et en la tirant à l'intérieur dudit élément de conduite jusqu'à la seconde extrémité de l'élément de conduite, puis on relâche la traction pour permettre son expansion radiale et son collage contre la surface interne de la paroi dudit élément de conduite, et
2- le découpage et l'usinage des extrémités de ladite conduite de chemisage de façon à former desdites parties terminales d'épaisseur réduite de ladite chemise interne et une partie terminale non chemisée de la paroi en acier dudit élément de conduite à chacune de ses extrémités.

Le procédé comprend les caractéristiques plus particulières suivantes :
- la surface externe de la conduite thermoplastique de chemisage est revêtue de colle dans au moins une zone située à l'extérieur dudit élément de conduite, au moins du côté de ladite première extrémité dudit élément de conduite, après relâchement de la traction et rétractation complète de ladite conduite de chemisage, à proximité ou au niveau des parties terminales d'épaisseur réduite du chemisage ;
- la surface externe de la conduite thermoplastique de chemisage est revêtue de colle dans deux zones situées à l'extérieur dudit élément de conduite, respectivement des deux côtés desdites première et deuxième extrémités dudit élément de conduite, et destinées à être positionnées après relâchement de la traction et rétractation complète de ladite conduite de chemisage, à proximité ou au niveau de chacune desdites parties terminales d'épaisseur réduite du chemisage ;
- avant l'étape 1-, la surface interne de ladite seconde extrémité de l'élément de conduite est revêtue d'une colle dans une première zone destinée à se trouver en vis-à-vis d'une première zone correspondante dudit chemisage correspondant à la proximité ou au niveau de ladite partie terminale d'épaisseur réduite du chemisage après usinage, et la surface externe de la conduite thermoplastique de chemisage est revêtue de colle à proximité ou au niveau d'une deuxième zone dudit chemisage destinée à former ladite partie terminale d'épaisseur réduite du chemisage du coté de ladite première extrémité dudit élément de conduite après usinage ;
- on réalise un traitement par un plasma froid, à l'aide d'un dispositif situé à l'extérieur dudit élément de conduite, sur les zones des surfaces externes de la conduite thermoplastique de chemisage destinées à être encollées ou destinées à être appliquées contre une zone encollée de la paroi en acier d'un dit élément de conduite, pour favoriser l'efficacité du collage ;
- la surface externe de la conduite thermoplastique de chemisage est traitée par un plasma froid au niveau d'une dite première zone de ladite conduite souple de chemisage destinée à être collée avec une dite première zone encollée 4b de la surface interne de la paroi en acier de ladite seconde extrémité dudit élément de conduite d'une part, et d'autre part, au niveau d'une seconde zone de la surface externe de ladite conduite souple de chemisage destinée à être ensuite encollée, ledit traitement au plasma étant réalisé avant introduction de ladite conduite souple de chemisage à l'intérieur dudit élément de conduite.
- on réalise ledit traitement plasma au niveau de ladite première zone de ladite conduite souple de chemisage selon une longueur supérieure à la somme à la longueur de rétractation de la dite conduite souple après relâchement de la traction sur ladite conduite de chemisage, additionnée de celle de ladite première zone encollée de la surface interne de la paroi en acier à ladite seconde extrémité de l'élément de conduite de façon à ce que lesdites premières zones se chevauchent sur toutes leurs longueurs depuis l'arrêt de la traction jusqu'à la rétractation complète de ladite conduite de chemisage après relâchement de ladite traction.

Pour ce faire, on comprend que l'on peut arrêter la traction de ladite conduite de chemisage lorsque l'arrière de ladite première zone de ladite conduite de chemisage arrive en correspondance avec ladite première zone encollée de la paroi en acier de la seconde extrémité de l'élément de conduite. Après relâchement de la traction, l'avant de ladite première zone de la conduite de chemisage arrivera en correspondance avec ladite première zone encollée de l'élément de conduite.

De préférence, avant l'étape 1-, on réalise le chauffage de ladite conduite thermoplastique de chemisage pour faciliter son étirement à diamètre réduit, de préférence par le passage dans une filière.

On comprend que ladite conduite en matériau souple présente, avant chauffage et traction au repos, un diamètre externe supérieur au diamètre interne de l'élément de conduite, et elle est introduite et étirée par chauffage et traction sous une forme présentant une section sensiblement circulaire de diamètre réduit.

D'autres caractéristiques et avantages de la présente invention apparaîtront à la lumière de la description détaillée qui va suivre, en référence aux figures suivantes dans lesquelles :
- la figure 1 est une coupe en vue de côté de l'assemblage d'une conduite, à l'aide d'un manchon tubulaire de jonction entre deux éléments de conduite ou longueurs unitaires de conduites chemisées,
- la figure 1A est une coupe en vue de côté du manchon tubulaire de jonction présentant deux extrémités du type conique intégrant un premier moyen de chauffage électrique par fil résistant disposé en spirale hélicoïdal sur la surface externe, de la figure 1,
- la figure 1B est une coupe en vue de côté d'un manchon tubulaire de jonction présentant deux extrémités frontales droites de type plane intégrant un second moyen de chauffage électrique par fil résistant disposé en spirale plane à chacune des extrémités planes du manchon,
- la figure 1C est une coupe en vue de côté d'un manchon tubulaire de jonction présentant une extrémité gauche de type conique intégrant un premier moyen de chauffage électrique, et une extrémité droite de type plane intégrant un second moyen de chauffage électrique par fil résistant,
- la figure 1D est une coupe en vue de côté du manchon tubulaire de jonction présentant deux extrémités du type cylindrique intégrant un premier moyen de chauffage électrique par fil résistant disposé en spirale hélicoïdale sur la surface externe de chacune des extrémités cylindriques du manchon,
- La figure 2 est une coupe en vue de côté d'une conduite en acier équipée d'une chemise interne usinée selon un cylindre femelle d'axe XX' de rayon interne R et recevant un manchon tubulaire de la figure 1D, usiné selon un cylindre mâle d'axe XX' de rayon externe sensiblement identique R,
- la figure 2A est une vue en perspective d'un premier mode de chauffage électrique par fil résistant en double spirale d'une zone cylindrique d'assemblage par fusion entre le manchon tubulaire et la chemise interne de la conduite, selon la figure 2,
- la figure 2B est une vue en perspective d'une variante de réalisation d'un fil chauffant parcourant la surface externe cylindrique d'une partie terminale de manchon tubulaire disposé autrement qu'en spirale.
- La figure 3 est une coupe en vue de côté d'une conduite en acier équipée d'une chemise interne usinée selon un plan perpendiculaire à l'axe XX' à une distance L2 de l'extrémité de ladite conduite, et recevant un manchon tubulaire selon la configuration de la figure 1C.
- Les figures 3A et 3B sont des coupes longitudinales selon un plan radial passant par les axes XX' et A'A de la figure 2A, détaillant la connexion électrique des fils résistants selon deux variantes, respectivement en double spirale (figure 3A) et en simple spirale (figure 3B), mais avec des spirales hélicoïdales à spires de diamètre croissant pour recouvrir une surface externe conique de partie terminal de manchon, comme sur les figures 1 et 1A.
- La figure 3C est une vue détaillant un second mode de chauffage électrique par fil résistant en spirale à spires concentriques planes d'une extrémité frontale droite 3a', 3b' d'un manchon tubulaire des figures 1B, 1C ou 3,
- Les figures 4A et 4B sont des vues en coupe longitudinale d'une zone de soudure par fusion 4-1 (« zone de fusion ») réalisée à l'aide d'un fil chauffant disposé en double spirale selon la figure 3A (figure 4A) et en simple spirale selon la figure 3B (figure 4B),
- Les figures 5A et 5B sont des vues en coupe longitudinales similaires de la zone de fusion 4-1 avec le cas d'assemblage d'extrémités frontales droites du manchon et du chemisage interne avec une double spirale concentrique plane (figure 5A) et une simple spirale concentrique plane (figure 5B),
- La figure 6A est une coupe en vue de côté d'une conduite en acier équipée d'une chemise interne coupée à ras de ladite conduite,
- La figure 6B illustre l'usinage de la partie conique de la chemise à une distance L1 de l'extrémité de ladite conduite,
- La figure 7 est une vue de côté en éclaté d'une rame en acier équipée d'une chemise interne usinée à chacune de ses extrémités selon le mode détaillé en référence à la figure 6B,
- La figure 8 est une coupe en vue de côté d'un manchon tubulaire de jonction obtenue par l'assemblage d'une pièce centrale usinée dans un tube de forte épaisseur, d'une extrémité gauche de type conique et d'une extrémité droite de type plane,
- La figure 8A est une variante de réalisation d'un manchon tubulaire obtenu par l'assemblage d'une pièce centrale 10-1 présentant une extrémité gauche de forme concave conique apte à être assemblée à l'extrémité conique convexe d'une deuxième partie tubulaire de manchon 10-2 dont l'autre extrémité est de type frontal droite, assemblée à un chemisage 2 également à extrémité frontale droite.
- la figure 9A représente en vue de côté un navire d'installation équipé d'une tour de pose dite en "J",
- les figures 9B-9C-9D sont des coupes en vue de côté des phases d'assemblage de deux longueurs successives de conduites chemisées, respectivement en phase de soudage par électrofusion d'un manchon tubulaire de jonction à la chemise inférieure, puis en phase d'approche de la rame supérieure à assembler (fig. 9B), puis en phase de soudage de la conduite acier (fig. 9C), et enfin en phase de soudage par électrofusion dudit manchon tubulaire à la chemise de la rame supérieure (fig. 9D),
- la figure 9E est une vue de côté en coupe axiale d'un mandrin expansible équipé de la partie mobile d'un connecteur électrique utile pour réaliser le soudage par électrofusion du manchon et de la chemise de la figure 9D.

Sur la figure 1, on a représenté une conduite 1 comprenant au moins 2 éléments de conduite 11, 12à chemisage interne 2 en polyéthylène ou polypropylène assemblés bout à bout, dans laquelle les extrémités des deux éléments de conduite sont soudées 5 l'une à l'autre. Chaque élément de conduite comprend un chemisage interne en matériau thermoplastique 2 d'axe XX' coïncidant sensiblement avec l'axe des éléments de conduite 11, 12, présentant à chaque extrémité une partie terminale conique d'angle au sommet α 2a, 2b d'épaisseur réduite par rapport à l'épaisseur de la partie courante 2c dudit chemisage, définissant une surface interne de révolution de diamètre interne plus grand que celui de la partie courante 2c dudit chemisage et se terminant à une certaine distance L de chaque extrémité dudit élément de conduite. La surface externe de chaque dite partie terminale 2a, 2b du chemisage interne est de préférence verrouillée par collage 4a, 4b de l'extrémité du chemisage au niveau ou à proximité de ladite partie terminale d'épaisseur réduite 2a, 2b du chemisage contre la surface interne correspondante de la paroi en acier de la conduite, à l'aide d'une colle, de préférence de type polyuréthanne ou époxy bi-composants.

Un manchon tubulaire de jonction 3 en matériau thermoplastique, de préférence identique au matériau thermoplastique du chemisage interne 2, d'axe XX' coïncidant sensiblement avec l'axe des éléments de conduite 11, 12, de même diamètre externe, juste légèrement inférieur au diamètre interne de la conduite, est inséré à l'intérieur de chacune des extrémités bout à bout des deux éléments de conduite, de manière à chevaucher lesdites parties terminales des deux chemisages 2a, 2b.

Plus précisément, sur la figure 1, le chemisage interne 2 présente à chaque extrémité de l'élément de conduite une partie terminale d'épaisseur réduite 2a, 2b par rapport à l'épaisseur de la partie courante 2c dudit chemisage, définissant une forme concave avec une surface interne tronconique d'angle au sommet α, de diamètre interne plus grand que celui de la partie courante 2c dudit chemisage, et, ledit manchon 3 présente à chaque extrémité longitudinale une partie terminale 3a, 3b d'épaisseur réduite par rapport à l'épaisseur de la partie courante adjacente 3c dudit manchon, ladite partie terminale 3a, 3b du manchon définissant une forme convexe apte à chevaucher la partie terminale d'épaisseur réduite dudit chemisage 2a, 2b avec laquelle elle est en contact, ladite partie terminale 3a,3b du manchon définissant une surface externe tronconique 3-2 de diamètre externe inférieur à celui de la partie courante adjacente 3c du manchon, de même angle au sommet α que ladite surface interne tronconique de ladite partie terminale concave dudit chemisage. Les parties terminales du manchon de forme conique définissent une surface interne 3-1 cylindrique sensiblement de même diamètre interne que celui des dites partie courante 2c du chemisage et partie courante 3c du manchon.

Sur la figure 1A et sur la partie gauche de la figure 1, le manchon présente dans une partie centrale 3d, c'est-à-dire environ à mi-longueur dans sa direction longitudinale axiale XX', un diamètre externe réduit inférieur aux diamètres externes de ses parties courantes 3c adjacentes à ladite partie centrale 3d de manière à ménager un espace annulaire 8, et on place une pièce annulaire 9 de protection thermique du manchon lors du soudage des extrémités des éléments de conduite, les dites parties courantes 3c du manchon présentant un diamètre externe sensiblement identique au diamètre interne des extrémités non recouvertes du dit chemisage des éléments de conduite assemblées.

La paroi tubulaire dudit manchon présente une épaisseur sensiblement constante dans sa partie centrale 3d et ses parties courantes adjacentes 3c, et sensiblement égale à l'épaisseur de la partie courante 2c dudit chemisage interne 2, et la dite partie centrale 3d du manchon est apte à se déformer pour adopter un diamètre interne sensiblement identique au diamètre interne du reste du manchon sous l'effet d'une pression interne du fluide circulant à l'intérieur de la conduite en opération d'au moins 1 MPa, et la pièce de protection thermique 9 est elle-même aussi déformable dans les même conditions de pression interne à l'intérieur de la conduite pour adopter une épaisseur réduite, de préférence une épaisseur inférieure à 5mm, de préférence encore inférieure à 2mm, ladite pièce de protection thermique étant de préférence encore constituée de fibres de céramique sous une forme similaire à du coton hydrophile.

On comprend que :
- la partie centrale du manchon du fait de son épaisseur sensiblement constante, présente une réduction du diamètre externe ainsi que du diamètre interne lors de la pose, la conduite étant vide et à la pression atmosphérique et lorsqu'elle est soumise à des pressions correspondant à des valeurs de pression inférieures à 1 Mpa (10 bars),
- dès que la pression interne excède 1 Mpa (10 bars), les épaisseurs notamment de l'ordre de 5 à 20mm et la rigidité du matériau plastique tel que du polyéthylène ou polypropylène permettent une augmentation des diamètres interne et externe de la partie centrale par déformation, par exemple lorsque circule à l'intérieur de la conduite et du manchon un fluide, notamment de l'eau sous pression, comme c'est le cas dans les conduites d'injection d'eau pour puits pétroliers supérieure à 5 MPa, notamment de 25 à 70 MPa.

Sur la partie supérieure de la figure 1, les extrémités des deux éléments de conduites en acier sont disposées face à face, prêtes à être soudées, alors que sur la partie inférieure de ladite figure, les deux éléments de conduites sont soudés en 5. Le manchon tubulaire de jonction étant représenté sur la partie gauche en configuration initiale, c'est-à-dire lorsque la pression à l'intérieur de la conduite et du manchon est sensiblement égale à la pression atmosphérique ou à une pression ambiante intérieure P0inférieure à 0.5-1 Mpa (5 à 10 bars). En revanche, sur la partie inférieure droite, le manchon 3 a été représenté déformé sous l'effet d'une pression de Pmax supérieure à 1 ou 2Mpa, à l'intérieur de la conduite et du manchon. La pression de service Pmax, lorsqu'il s'agit de la pression de l'eau que l'on injecte dans des puits particuliers du champ pétrolier est en général de l'ordre de 25 à 40 MPa (250 à 400 bars), mais peut atteindre et dépasser 70MPa (700 bars).

Du fait que la pression P0à l'extérieur de la chemise est très inférieure à la pression interne Pmax, cette dernière a pour effet de plaquer de manière énergique la partie centrale rétreinte 3d du manchon tubulaire de jonction 3 contre la paroi de la conduite acier, l'écran 9 en fibre céramique étant lui aussi écrasé et ne présentant alors qu'une épaisseur résiduelle de pas plus de 1 à 2mm.

Le manchon 3 présente une partie centrale 3d de diamètre externe réduit qui reviendra se plaquer à l'intérieur de la conduite dès lors que la pression interne dépasse 1 à 1.5 MPa (10 à 15 bars) grâce à la souplesse du matériau thermoplastique. Pour améliorer la déformabilité de cette partie centrale 3d et des zones de transition adjacentes, on réduira avantageusement l'épaisseur de ces zones par rapport à l'épaisseur de la partie courante 3c du manchon, d'une proportion de 5 à 50%. De même, cette zone centrale 3d ainsi que les zones de transitions ont été représentées pour la clarté des dessins avec des raccordements à angle vif, mais on préférera des congés de raccordement à grand rayon de courbure, de manière à éviter l'apparition d'amorces de ruptures par fissuration dans ces zones.

Sur les figures 3A et 3B, on a représenté deux modes de réalisation d'un fil électrique chauffant 6 disposé en spirale sur la surface externe 3-2 des parties terminales 3a-3b coniques du manchon des figures 1 et 1A.

Sur la figure 2A, on a représenté un fil chauffant 6 replié 6c sur lui-même de manière à former une double spirale formée de deux parties de fil 6a,6b disposées côte à côte formant deux spirales sensiblement équidistantes se rejoignant à une extrémité commune constituée par une boucle 6c en épingle à cheveux, chaque spirale parcourant ladite surface externe 3-2 de chaque dite partie terminale du manchon depuis sa première extrémité de spirale 6-1 la plus proche de l'extrémité du manchon correspondant à ladite partie terminale, vers une deuxième extrémité de spirale 6-2 consistant en la dite extrémité commune en boucle 6c, la dite deuxième extrémité de spirale 6-2,6c étant la plus proche de la surface externe 3-3 de la partie courante 3c du manchon adjacente à ladite partie terminale 3a,3b de manchon, de sorte que les deux extrémités libres non spiralées 6d-1, 6d-2 des deux parties 6a,6b du fil comportant les deux bornes d'alimentation électrique 7a,7b rejoignent les dites premières extrémités 6-1 des deux spirales et sont disposées d'un même côté de ladite zone de fusion 4-1 dans la direction axiale de révolution XX' desdites spirales, les deux bornes 7a, 7b dudit fil 6 étant ainsi réunies côte à côte au niveau d'un connecteur électrique commun 7 au niveau de la surface interne 3-1 du manchon.

Sur la figure 2A, la double spirale est à spires de diamètre sensiblement constant, destinées à recouvrir une surface externe cylindrique de partie terminale de manchon comme sur la figure 1D.

En revanche, sur la figure 3A, la double spirale présente un diamètre croissant des spires dans la direction axiale XX' de manière à pouvoir recouvrir une partie de la surface externe conique 3-2 de partie terminale 3a-3b de manchon.

Sur les figures 2A et 3A, le courant électrique entre en 7a dans le fil, lequel est organisé en configuration de spirale conique montante 6a (représentée en blanc figure 3A ) sur plusieurs tours, par exemple sur 10 tours puis atteint l'extrémité 6-2 en boucle repliée sur elle-même 6c, et revient en configuration de spirale conique descendante 6b (représentée en noir figure 3A ) sur le même nombre de tours, de manière à atteindre la borne de sortie 7b. Les spirales montante et descendante sont bobinées à spires légèrement espacées, par exemple espacées de 1mm et ne se recoupent pas, donc n'interfèrent pas entre elles. Les termes « montante » et « descendante » se réfèrent au sens de circulation de l'électricité dans ledit fil.

Sur la figure 3B, on a représenté une variante en spirale unique de l'installation du fil chauffant. Le fil est installé en une seule spirale descendante 6b. Le fil démarre de la borne 7a d'un premier connecteur, effectue sa spirale descendante et aboutit à la borne 7b d'un deuxième connecteur. Dans ce mode de réalisation, la portion 6d de fil reliée au connecteur 7a doit traverser de part en part l'épaisseur du manchon tubulaire de jonction et risque donc de mettre en communication par cheminement le long dudit fil, l'intérieur de la conduite soumise à une pression Pmax et l'extérieur dudit manchon où règne une pression P0, c'est à dire sensiblement la pression atmosphérique, voire quelques bars.

Les figures 4A et 4B correspondent à des vues en coupe des zones de fusion correspondant à des zones de contact étanche 41 des surfaces de contact coniques des parties terminales de manchon et de chemise de la figure 1, avec une double spirale selon la figure 3A pour la figure 4A, et une simple spirale de la figure 3B pour la figure 4B.

Les figures 4A et 4B permettent de comprendre que dans le mode de réalisation à simple spirale des figures 3B et 4B, lorsque la conduite est soumise à une pression interne de service Pmax par circulation par exemple d'eau sous pression, celle-ci peut cheminer le long de la partie de fil non spiralée 6d-2 assurant la liaison entre la borne 7a et la deuxième extrémité 6-2 de la spirale. Dans ce mode de réalisation la portion 6d-2 de fil reliée au connecteur 7a, traverse de part en part l'épaisseur du manchon tubulaire de jonction et risque donc de mettre en communication, par cheminement le long du fil, l'intérieur de la conduite soumise à une pression Pmax et l'extérieur dudit manchon où règne une pression P0, c'est-à-dire sensiblement la pression atmosphérique, voire quelques bars. C'est-à-dire, que de l'eau peut parvenir au niveau de l'interface 4-3 des surfaces de contact coniques des parties terminales 3a,2a du manchon et du chemisage interne et ainsi accéder à la chambre annulaire 8 et l'espace entre la conduite et le manchon, ce qui représente une perte d'étanchéité que l'on cherche à éviter.

En revanche, du côté opposé de la zone de fusion 41 vers l'interface 4-2 entre les surfaces de contact desdites parties terminales de manchon et de chemise 3a,2a débouchant du côté de la surface interne 3-1 du manchon et à l'intérieur de la conduite, le fait que l'eau puisse cheminer le long de l'extrémité de fil non spiralé 6d-1 entre la première extrémité 6-1 et la deuxième borne 7b et accéder ainsi à cette interface 4-2 n'est pas un problème, puisque l'essentiel est que la zone de fusion 4-1 empêche l'eau de remonter jusqu'à l'interface 4-3 débouchant sur l'extérieur du manchon et donc la zone de soudure 5.

Sur la figure 4A, du fait que les deux extrémités 6d-1 et 6d-2 des parties de fil 6a-6b de la double spirale débouchent sur la partie 4-2 de l'interface 3 des surfaces de contact des manchon et chemise débouchant sur la surface interne 3-1 et l'intérieur de la conduite, la zone de fusion 4-1 réalise une étanchéité complète empêchant tout passage d'eau dans l'autre partie 4-3 de ladite interface débouchant sur l'extérieur du manchon en vis-à-vis de la paroi externe 3-3 de la partie courante du manchon.

De plus, dans le cas de l'utilisation de courant alternatif pour réaliser l'électrofusion, ce mode présente l'avantage de ne pas créer de champ magnétique significatif à l'intérieur dudit manchon tubulaire de jonction, donc au niveau du mandrin expansible 20 décrit ci-après, car le champ magnétique créé par la spirale montante est compensé par celui créé de manière simultanée par la spirale descendante, les deux champs s'annulant sensiblement. Ceci constitue un grand avantage, car le processus d'électrofusion doit être rapide et le courant injecté est en conséquence de forte intensité.

Sur la figure 2B, on a représenté une variante de réalisation d'un fil chauffant 6 parcourant une surface cylindrique ou conique sans se croiser, le fil chauffant n'est pas disposé en spirale, mais réalise un seul tour complet de la périphérie 27 autour de l'axe de révolution XX' en faisant une série d'aller et venues entre les deux extrémités dans la direction axiale XX' de ladite surface cylindrique ou conique parcourue par le fil au fur et à mesure de sa progression autour de la périphérie de ladite surface. Ce mode de réalisation est par contre plus difficile à réaliser par moulage ou en ce qui concerne la pose du fil dans des gorges usinées sur la surface externe des parties terminales du manchon comme requis.

Sur la figure 1B, on a représenté une variante de réalisation d'un manchon selon l'invention, dans laquelle les parties terminales 3a-3b du manchon sont de même épaisseur que la partie courante 3c et partie centrale 3d du manchon et se terminent par des extrémités frontales à section droite perpendiculaire à l'axe XX'. Ladite extrémité frontale 3a' forme en vue de côté une surface annulaire plane représentée figure 3C revêtue d'une double spirale à spires concentriques dont la première extrémité 6-1 débouche sur la face interne 3-1 du manchon, tandis que l'autre extrémité 6-2 de plus grand diamètre correspondant à la boucle en épingle à cheveux 6c de la double spirale, arrive à proximité de la surface externe 3-2 du manchon. Ce type d'extrémité frontale droite est destiné à coopérer avec une extrémité frontale droite des parties terminales 2a-2b du chemisage interne comme représenté sur la figure 3.

Sur les figures 5A et 5B, on montre de la même manière que sur les figures 4A et 4B, que la mise en oeuvre d'une double spirale sur la figure 5A est avantageuse pour éviter que la pression interne Pmax à l'intérieur de la conduite et du manchon ne se retrouve du côté de la surface externe du manchon 3-2 par risque de circulation d'eau le long de la partie de fil non spiralé 6d-2 assurant la jonction entre la borne 7a débouchant sur la surface interne 3-1 du manchon et la deuxième extrémité 6-2 de la spirale donnant accès à la partie d'interface 4-3 débouchant sur l'extérieur du manchon. La présence d'eau à pression Pmax à l'extérieur du manchon, par perte d'étanchéité est dommageable, puisqu'elle soumet la soudure 5 à des risques de corrosion et à une moindre résistance à la fatigue, ce qui est préjudiciable au bon fonctionnement de la conduite pendant toute sa durée de vie qui atteint et dépasse 25 ans, voire plus.

Sur les figures 1D et 2, lesdites surface interne de la partie terminale d'épaisseur réduite 2a,2b du chemisage et surface externe de la partie terminale d'épaisseur réduite 3a,3b du manchon, en contact l'une contre l'autre sont de même forme cylindrique de même axe XX' que les dit manchon et dite conduite, l'extrémité de la partie terminale d'épaisseur réduite du manchon venant buter contre un épaulement 2e délimitant les surfaces internes des dites partie courante 2c et partie terminale d'épaisseur réduite 2a,2b du chemisage.

Dans ce mode de réalisation à surface de contact cylindrique, ledit manchon est inséré contre la partie terminale d'épaisseur réduite 2a-2b du chemisage jusqu'à ce que l'extrémité 2f du chemisage vienne buter contre un épaulement 3e délimitant ladite partie courante 3c du manchon et la dite partie terminale de plus faible épaisseur 3a-3b du manchon, et/ou ledit manchon est inséré contre la partie terminale d'épaisseur réduite 2a-2b du chemisage jusqu'à ce que l'extrémité 3f du manchon vienne buter contre l'épaulement 2e délimitant la partie courante 2c et la dite partie terminale 2a-2b d'épaisseur réduite du chemisage.

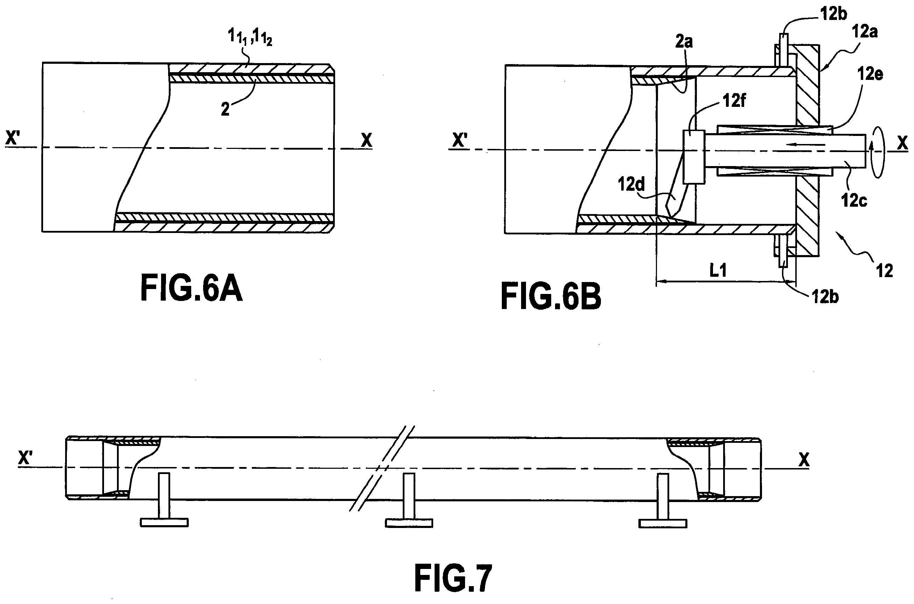

Pour mémoire et comme décrit dans WO 2006/042925, les partie terminales de chemisage sont réalisées en fin de processus d'insertion par « swagelining » et le cas échéant de collage, la chemise étant alors découpée à ras de l'élément de conduite acier, puis l'usinage est réalisé par une machine d'usinage 12 installée sur la face de la première extrémité de l'élément de conduite, comme explicité sur les figures 6A-6B. La machine d'usinage 12 est constituée de façon connue d'un bâti 12a portant une motorisation, non représentée, qui met l'arbre porte-outil 12c en rotation, un dispositif 12e assure le déplacement du porte-outil dans la direction XX', un dispositif 12f assure le déplacement radial de l'outil d'usinage 12d. La machine est équipée de moyens de centrage 12b qui permettent d'ajuster l'axe XX' de ladite machine pour le faire coïncider avec l'axe de l'élément de conduite, et ainsi pouvoir usiner l'intérieur de la chemise à ses extrémités, de manière parfaitement concentrique à ladite conduite en acier. Pour la clarté des dessins, sur les figures 6A-6B, la chemise 2 a été représentée légèrement distante de la paroi de l'élément de conduite en acier, de manière à mettre en évidence la position approximative de la zone encollée 4a par rapport à la zone de la partie terminale usinée d'épaisseur réduite 2a de ladite chemise. En fait, chemise et paroi sont en contact intime et le joint de colle 4a s'étale naturellement sur une surface importante, mais une zone de la chemise traitée au plasma présentera une adhérence plus importante et connue, les zones non traitées présentant une adhérence quasiment nulle.

Sur la figure 3 on a effectué de manière similaire un usinage plan perpendiculaire à l'axe XX' situé à une distance L2 de l'extrémité de ladite conduite. Sur la figure 2 on a effectué de manière similaire un usinage cylindrique d'axe X'X et de rayon R sur une longueur L3 et à une distance L4 de l'extrémité de ladite conduite.

Ainsi, plusieurs modes d'assemblage entre les chemises internes et les manchons tubulaires de jonction sont possibles et présentent chacun un avantage vis-à-vis de l'épaisseur du chemisage interne 2. La valeur de l'angle α entre l'axe XX' et la génératrice de la surface de la partie terminale 3a-3b du manchon en contact avec la partie terminale 2a-2b de la chemise peut varier de 0 à 90°. Pour les modes de réalisation des figures 1, 1A et 1C, montrant une partie terminale 3a de forme convexe conique, la surface externe conique présente un demi-angle au sommet α compris entre 0 et 90°, le sommet du cône se trouvant sur la gauche de la figure.

Sur la figure 1B, on a représenté une forme dite frontale : c'est en fait une forme équivalente à la forme conique, dans laquelle l'angle α vaut 90°.

Sur la figure 1D, on a représenté une forme cylindrique : c'est en fait une forme équivalente sous forme conique, dans laquelle l'angle au sommet vaut 0°, le sommet du cône fictif se trouvent alors à l'infini.

Dans le cas de chemises de faible épaisseur, par exemple 3 à 5mm, on utilisera avantageusement le mode conique des figures 1 et 1A avec un angle α compris entre 5° et 45°, de préférence 10° et 30°. Pour les moyennes épaisseurs, par exemple 6 à 12mm, on utilisera avantageusement le mode cylindrique de la figure 1D. Pour les fortes épaisseurs, par exemple 12 à 20mm, on utilisera avantageusement le mode frontal de la section droite de la figure 1B.

Dans le cas de préfabrication en atelier, les conditions opérationnelles sont nettement plus simples que sur site, et de plus le coût horaire du navire de pose n'intervient pas. On pourra donc être amené à préparer des manchons tubulaires de jonction et des rames avec des technologies d'assemblage différentes de celles utilisées sur site. A cet effet, sur la figure 1C on a détaillé un manchon tubulaire de jonction de type mixte, possédant, sur la droite une extrémité de type frontal qui sera assemblée en atelier sur l'extrémité frontale correspondante d'une chemise interne de rame telle que décrite en référence à la figure 3.

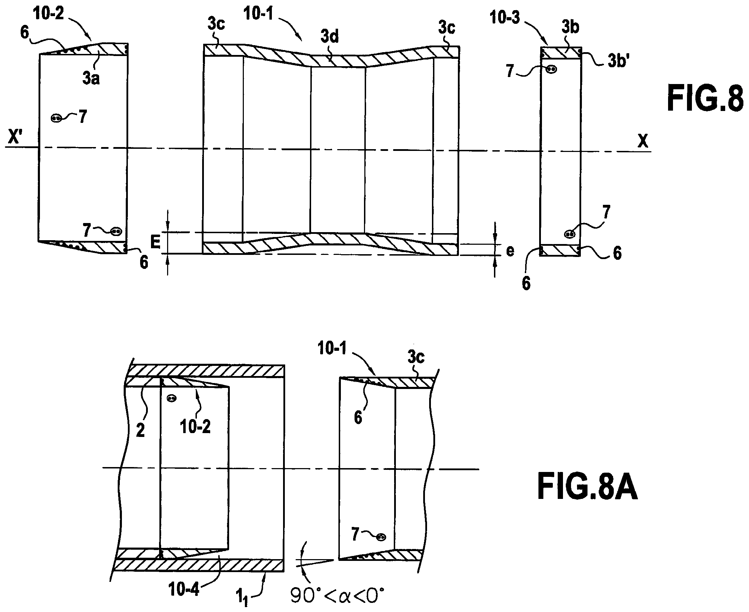

Sur la figure 8, on a représenté une variante du manchon tubulaire de jonction de la figure 1C obtenue par assemblage de trois éléments :
- un élément central 10-1 obtenu par usinage d'une ébauche tubulaire en polyéthylène de forte épaisseur (E) représentée en pointillés,
- un premier élément latéral 10-2 rapporté situé sur la gauche, dont l'extrémité de gauche est de type conique, et l'extrémité de droite de type frontal, chacune desdites extrémités comportant un fil chauffant,
- un second élément latéral 10-3 rapporté situé sur la droite, dont les extrémités de gauche et de droite sont de type frontal, chacune desdites extrémités comportant un fil chauffant. Le manchon tubulaire de jonction 3 est alors obtenu en atelier par électrofusion du premier élément latéral 10-2 sur l'élément central 10-1, puis par électrofusion du second élément latéral 10-3 sur ledit élément central 10-1.

Dans ce procédé, la pièce centrale 10-1 est usinée de manière à ce que sa paroi adopte une épaisseur constante inférieure e avec un diamètre interne restreint en partie centrale 3d. Seules les pièces latérales 10-2 et 10-3 de plus petite dimension sont réalisées par exemple par moulage, puis électrosoudées sur la pièce centrale.

L'électrosoudage sur la pièce centrale peut être réalisé avec un fil chauffant du type spiralé tel que recouvrant la surface d'une des extrémités dudit élément central 10-1 ou desdits premier élément latéral 10-2 et second élément latéral 10-3. D'autres moyens de soudage par fusion, à l'aide de plaques chauffantes par exemple, peuvent être avantageusement réalisés en atelier.

Sur la figure 8A, on a représenté un mode de réalisation avantageux dans lequel la jonction entre deux parties de manchon tubulaire 10-1 et 10-2 se fait par des extrémités de forme conique, respectivement concave pour la première partie 10-1 et convexe pour la deuxième partie 10-2 présentant des surfaces coniques interne pour la première partie 10-1 et externe pour la deuxième partie 10-2, de même angle au sommet. Dans ce mode de réalisation, lorsque la deuxième partie 10-2 du manchon tubulaire est collée soudée par électrofusion contre l'extrémité du chemisage 2 à l'intérieur de l'élément de conduite 11, l'extrémité biseautée de la première partie 10-1 de manchon tubulaire peut venir se caler comme un coin dans l'espace angulaire 10-4 vide, de sorte que la surface interne conique concave de la première partie 10-1 de manchon en butée contre la surface externe convexe conique de l'extrémité de la deuxième partie tubulaire du manchon 10-2 constitue la plus grande surface possible de contact d'électrosoudage entre les deux parties 10-1 et 10-2 de manchon tubulaire, et donc l'électrosoudage le plus solide.

Sur la figure 8A, on voit que la surface interne concave conique de la première partie 10-1 est revêtue d'un fil chauffant spiralé 6, ce qui permet de réaliser le soudage entre les deux parties 10-1 et 10-2 par électrofusion.

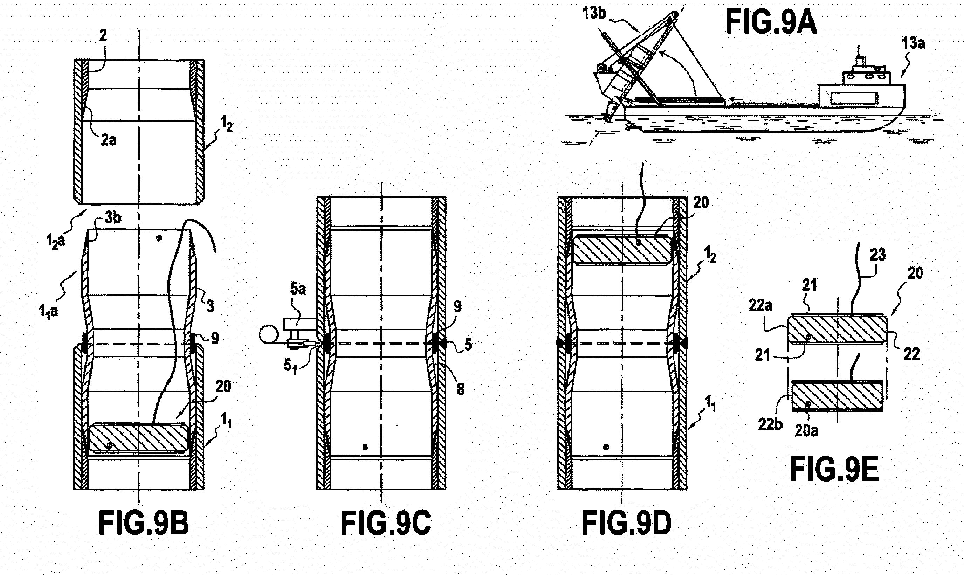

Sur les figures 9A-9E on a représenté l'assemblage entre deux longueurs unitaires de conduite chemisée, lors de l'installation sur site qui est effectuée à bord d'un navire de pose 13a équipé d'une tour de pose en J 13b, tel que représenté sur la figure 9A. A cet effet, l'élément de conduite terminal 11 d'une de conduite chemisée déjà posée est maintenu fixement en suspension en pied de tour, comme représenté sur la figure 9B. On insère alors un manchon tubulaire de jonction, par exemple du type représenté sur la figure 1. Puis, on insère un mandrin expansible 20 qui permet de réaliser l'électrofusion du joint entre le manchon tubulaire 3 et la chemise interne 2 au niveau de la surface de révolution 2a.

Le mandrin 20 est détaillé sur la figure 9E. Il est de type expansible et comporte un noyau rigide 21 en forme de jante, par exemple en matériau composite, une membrane expansible, par exemple une chambre à air 22 qui peut être gonflée par l'intermédiaire d'un ombilical 23 alimenté en air comprimé, ledit ombilical amenant également le courant électrique jusqu'à un connecteur d'alimentation 20a. Ledit mandrin est représenté en partie haute de ladite figure 9E en position expansée 22a et en partie basse en position rétractée 22b. Ainsi, on introduit le mandrin 20 à l'intérieur du manchon tubulaire de jonction 3, de manière à positionner le connecteur 20a en face du connecteur complémentaire 7 dudit manchon tubulaire de jonction. Puis, on expanse 22a le mandrin, et l'on injecte le courant électrique qui fait fondre toute la zone recouverte par le fil chauffant. On effectue ainsi, de manière connue, la soudure par électrofusion du plan de contact entre le manchon tubulaire de jonction 3 et la chemise 2. Le mandrin expansible 20 est avantageusement expansé avec une pression importante, ce qui permet de garantir une excellente compacité dans le plan de fusion, ainsi que l'absence de bulles d'air, ces dernières étant préjudiciables à une bonne étanchéité au niveau de la surface de fusion.

Comme représenté sur la figure 9B, un nouvel élément de conduite chemisée 12 est transféré, de manière connue, de la position horizontale à la position oblique correspondant à l'inclinaison de la tour pour être ensuite positionné dans l'axe du manchon et de l'élément de conduite terminal 11 de l'extrémité de la rame en cours de pose. Le dit élément de conduite à assembler 12 est ensuite déplacé axialement vers l'élément de conduite terminal 11 en suspension. La partie supérieure du manchon 3 forme une extrémité mâle 11a de l'élément de conduite 11 et pénètre dans l'extrémité femelle 12a de l'élément de conduite à assembler 12, jusqu'à ce que la partie terminale 3b du manchon vienne en contact avec la partie terminale 2a de la chemise à l'intérieur de l'élément de conduite 12. L'élément de conduite 12 étant proche de la verticale, son poids propre est suffisant pour permettre alors au manchon de pénétrer complètement la chemise pour atteindre la configuration de la figure 9C, où les deux élément de conduite 11, 12 sont maintenus à quelques mm de distance, par exemple par de simples cales non représentées, de manière à pouvoir effectuer, de manière connue, la soudure 5 au moyen d'un robot de soudage orbital 5a connu de l'homme de l'art. Sur cette même figure 9C on a représenté en partie haute vers la gauche, les parois des conduites acier chanfreinées 51 distantes de quelques mm en cours de soudage, l'écran 9 constitué d'un matelas en mousse céramique limite le transfert de chaleur et protège le manchon thermoplastique pendant toute la durée du processus de soudage. Et, en partie droite, on a représenté la soudure 5 terminée.

Enfin, comme représenté sur la figure 9D, on introduit depuis l'extrémité supérieure de la rame 12un mandrin expansible 20 que l'on positionne de telle manière que le connecteur mobile d'alimentation électrique 20a soit en face du connecteur récepteur 7 du manchon tubulaire de jonction, puis on expanse le mandrin et on effectue l'électrofusion de la jonction comme décrit précédemment.

En cas d'incident lors de l'installation sur site, on peut être amené à couper la conduite au niveau d'une soudure défectueuse. Dans ce cas, on sectionne la conduite ainsi que le manchon tubulaire de jonction déjà en place, à environ 15-20cm de ladite soudure, puis on réalise un nouveau chanfrein sur la conduite acier, puis à l'aide d'une machine similaire à la machine 12 de la figure 6B, on détruit la partie restante du manchon tubulaire de jonction avec la spirale chauffante et l'on usine une nouvelle partie terminale de jonction au niveau de l'extrémité du chemisage, soit de type conique, soit de type frontal, ou encore de type cylindrique. On réinstalle alors un nouveau manchon tubulaire de jonction et on reprend alors la pose de la rame ou élément de conduite suivant, comme décrit précédemment.

## Revendications

1. Manchon tubulaire de jonction en matériau thermoplastique, apte à être inséré à l'intérieur d'une conduite (1) comprenant au moins 2 éléments de conduite en acier (1₁,1₂) à chemisage interne en matériau thermoplastique (2) au niveau de l'assemblage bout à bout des extrémités des deux éléments de conduite soudées (5) l'une à l'autre, ledit manchon présentant à chaque extrémité une partie terminale de paroi tubulaire (3a, 3b) d'épaisseur réduite par rapport à l'épaisseur de la partie courante adjacente (3c) de la paroi tubulaire dudit manchon, ledit manchon (3) présentant à au moins une, de préférence à chacune, des dites parties terminales (3a,3b) du manchon un fil chauffant par effet joule (6), disposé en spirale en surface externe (3a',3b') de ladite partie terminale (3a,3b) dudit manchon, dans lequel ledit fil chauffant est replié (6c) sur lui-même de manière à former une double spirale (6a,6b) formée de deux parties de fil (6a,6b) disposées côte à côte formant deux spirales sensiblement équidistantes se rejoignant à une extrémité commune constituée par une boucle (6c) en épingle à cheveux, chaque spirale parcourant ladite surface externe (3-2) de chaque dite partie terminale du manchon depuis sa première extrémité de spirale (6-1) la plus proche de la surface interne de la paroi tubulaire du manchon, vers une deuxième extrémité de spirale (6-2) consistant en la dite extrémité commune en boucle (6c), la dite deuxième extrémité de spirale (6-2,6c) étant la plus proche de la surface externe(3-3) de la partie courante (3c) du manchon adjacente à ladite partie terminale (3a,3b) de manchon, les deux extrémités libres non spiralées (6d-1, 6d-2) des deux parties (6a,6b) du fil aux dites premières extrémités (6-1) des deux spirales rejoignant la surface interne du manchon, les deux dites extrémités libres des deux parties du fil aux dites premières extrémités de la double spirale comportent deux bornes d'alimentation électrique (7a,7b) dudit fil (6) pouvant ainsi être réunies côte à côte au niveau d'un connecteur électrique commun (7) au niveau de la surface interne (3-1) du manchon, **caractérisé en ce que** ledit fil spiralé de chauffage par effet joule est situé au niveau des extrémités frontales droites (3a',3b') dudit manchon.

2. Manchon tubulaire de jonction (3) selon la revendication 1, **caractérisé en ce que** :
- ledit manchon est réalisé par assemblage par soudage par fusion, de préférence par électrofusion, des surfaces des extrémités en contact l'une avec l'autre d'au moins 2 parties tubulaires de dit manchon comprenant au moins :
• une première partie tubulaire (10-1) de manchon comprenant une partie courante (3c) de manchon et une partie centrale (3d) de manchon de diamètre externe et de préférence de diamètre interne, de dimension(s) réduite(s) par rapport au diamètre externe, et de préférence respectivement diamètre interne, de la partie courante adjacente (3c), de préférence encore ladite première partie tubulaire de manchon (10-1) étant obtenue par usinage d'un manchon tubulaire de plus grande épaisseur, et
• au moins une deuxième partie tubulaire (10-2,10-3) de manchon comprenant partie terminale (3a, 3b) tubulaire de manchon présentant de préférence une plus petite longueur que ladite première partie tubulaire dans la direction axiale XX' du manchon, et de préférence présentant une surface interne cylindrique, et de préférence encore, la dite deuxième partie de manchon (10-2) étant obtenue par moulage, et
- les extrémités de deux dites première et deuxième parties tubulaires de manchon assemblées présentent des formes identiques ou complémentaires au niveau de leur zone de contact, dont une des dites surfaces au moins est recouverte d'un dit fil chauffant par effet joule, enroulé en double spirale, et dont les extrémités libres débouchent sur la surface interne (3-1) de ladite partie tubulaire de manchon.

3. Conduite (1) comprenant au moins 2 éléments de conduite en acier (1₁,1₂) à chemisage interne en matériau thermoplastique (2) assemblés bout à bout, dont les extrémités des deux éléments de conduite sont soudées (5) l'une à l'autre, dans laquelle un dit manchon tubulaire de jonction (3) selon l'une des revendications 1 ou 2 est intercalé à l'intérieur de la conduite au niveau des extrémités bout à bout des deux éléments de conduite, de manière à ce que les parties terminales (3a,3b) aux extrémités dudit manchon sont, en partie au moins, en contact étanche (4-1) respectivement avec des parties terminales (2a,2b) aux extrémités desdits chemisages internes des deux éléments de conduite, ladite zone de contact étanche (4-1) étant une zone de soudure par fusion entre elles des matières constitutives de chaque dite partie terminale (3a,3b) du manchon parcourue par ledit fil chauffant en double spirale et respectivement chaque dite partie terminale (2a,2b) de dit chemisage en contact l'une avec l'autre, et ledit fil spiralé de chauffage par effet joule est situé au niveau des extrémités frontales droites (2a'-2b',3a'-3b') dudit manchon et dit chemisage en butée l'une contre l'autre.

4. Procédé de réalisation d'une conduite selon la revendication 3, comprenant les étapes dans lesquelles :
1) on réalise l'assemblage d'éléments de conduites (1₁,1₂) comprenant un dit chemisage (2) avec une partie terminale d'épaisseur réduite (2a,2b) à chaque extrémité, et un dit manchon tubulaire de jonction (3) inséré à seulement une extrémité de chaque dit élément de conduite (1₁, 1₂) et dépassant de celle-ci, le dépassement dudit manchon définissant une extrémité mâle (1₁b) de chaque dit élément de conduite (1₁) apte à être assemblée avec une extrémité dépourvue de dit manchon définissant une extrémité femelle (1₂a) d'un autre dit élément de conduite (1₂), en introduisant et insérant en force ladite extrémité femelle (1₂a) dépourvue de manchon tubulaire de jonction d'un élément de conduite à assembler (1₂) autour de l'extrémité mâle (1₁b) comprenant un manchon tubulaire de jonction fixe qui dépasse de l'élément de conduite terminal (1₁) d'une conduite en cours d'assemblage, dans la direction longitudinale (XX') axialement, jusqu'à ce que ladite partie terminale (3a,3b) du manchon de la ladite extrémité mâle (1₁b) dudit élément de conduite terminal soit en contact avec la dite partie terminale (2a,2b) du chemisage de ladite extrémité femelle (1₂a) dudit élément de conduite à assembler(1₂), chaque dit manchon comprenant sur chacune desdites parties terminales (3a,3b) du manchon un dit fil chauffant par effet joule (6) enroulé en double spirale, puis
2) on alimente le dit fil chauffant (6) en électricité, de préférence en exerçant simultanément une pression de ladite partie terminale de manchon contre ladite partie terminale de chemisage en contact l'une avec l'autre, pour réaliser une dite zone de soudure (4-1) par électrofusion au niveau d'une partie au moins de l'interface des surfaces de chaque dite partie terminale (3a,3b) du manchon et chaque dite partie terminale (2a,2b) de chemisage en contact l'une avec l'autre et parcourues par la double spirale de fil chauffant à la surface du manchon, pour réaliser une dite zone de contact étanche par fusion (4-1), et
3) on réalise le soudage (5) des extrémités des deux éléments de conduite bout à bout.

5. Procédé selon la revendication 4, **caractérisé en ce que** :
a) le dit manchon présente dans une partie centrale (3d), un diamètre externe inférieur aux diamètres externes des parties courantes (3c) adjacentes à ladite partie centrale (3d) de manière à ménager un espace annulaire (8) entre le manchon et la paroi desdits éléments de conduite, et on place une pièce annulaire (9) de protection thermique apte à protéger le manchon lors du soudage des extrémités des éléments de conduite, les dites parties courantes (3c) du manchon présentant de préférence un diamètre externe sensiblement identique au diamètre interne des extrémités non recouvertes du dit chemisage des éléments de conduite assemblées, et
b) la paroi tubulaire dudit manchon présente une épaisseur sensiblement constante, dans ses dites parties courantes adjacentes (3c), et sensiblement égale à l'épaisseur de la partie courante (2c) dudit chemisage interne (2), et la dite partie centrale (3d) du manchon, de préférence d'épaisseur réduite, est apte à se déformer pour adopter un diamètre interne sensiblement identique au diamètre interne du reste du manchon sous l'effet d'une pression interne du fluide circulant à l'intérieur de la conduite en opération d'au moins 1 MPa, et la pièce de protection thermique (9) est elle-même aussi déformable dans les même conditions de pression de préférence pour adopter une épaisseur inférieure à 5mm de préférence encore inférieure à 2mm, ladite pièce de protection thermique étant de préférence encore constituée de fibres de céramique, et
c) on exerce la dite pression contre la surface interne (3-1) du manchon au niveau de sa dite partie terminale en introduisant à l'intérieur du manchon un dispositif (20) comprenant une cellule gonflable (22), initialement au moins partiellement dégonflée, de préférence ladite cellule comprenant ou coopérant à sa surface avec un connecteur électrique d'alimentation électrique (20a) que l'on positionne de telle sorte que ledit connecteur électrique de la cellule (20a) puisse coopérer avec le connecteur électrique (7) sur la surface interne du manchon incluant les bornes (7a,7b) du fil chauffant (6) lorsque l'on gonfle la dite cellule, puis on gonfle ladite cellule.

## Patentansprüche

1. Rohförmige Verbindungsmuffe aus thermoplastischem Material, die geeignet ist, in eine Leitung (1) eingesetzt zu werden, die wenigstens zwei Leitungselemente aus Stahl (1₁, 1₂) mit Innenauskleidung aus thermoplastischem Material (2) im Bereich der Stumpfverbindung der Enden der beiden aneinander geschweißten (5) Leitungselemente umfasst, wobei die Muffe an jedem Ende ein Endteil einer rohrförmigen Wand (3a, 3b) mit einer gegenüber der Dicke des benachbarten durchgehenden Teils (3c) der rohrförmigen Wand der Muffe reduzierten Dicke aufweist, wobei die Muffe (3) an wenigstens einem, vorzugsweise an jedem der Endteile (3a, 3b) der Muffe einen Widerstandsheizfaden (6) aufweist, der an der Außenfläche (3a', 3b`) des Endteils (3a, 3b) der Muffe spiralförmig angeordnet ist, in welcher der Heizfaden um sich selbst gebogen ist (6c), um eine Doppelspirale (6a, 6b) zu bilden, die von zwei Seite an Seite angeordneten Fadenteilen (6a, 6b) gebildet ist, welche zwei im Wesentlichen äquidistante Spiralen bilden, die an einem durch eine haarnadelförmige Schlaufe (6c) gebildeten gemeinsamen Ende zusammenlaufen, wobei jede Spirale die Außenfläche (3-2) eines jeden Endteils der Muffe von ihrem ersten Spiralenende (6-1), das der Innenfläche der rohrförmigen Wand der Muffe am nächsten liegt, hin zu einem zweiten Spiralenende (6-2), das aus dem gemeinsamen schlaufenförmigen Ende (6c) besteht, entlangläuft, wobei das zweite Spiralenende (6-2, 6c) der Außenfläche (3-3) des durchgehenden Teils (3c) der Muffe, die dem Endteil (3a, 3b) der Muffe benachbart ist, am nächsten liegt, wobei die beiden nicht spiralförmig gewickelten freien Enden (6d-1, 6d-2) der beiden Teile (6a, 6b) des Fadens an den ersten Enden (6-1) der beiden Spiralen auf die Innenfläche der Muffe treffen, die beiden freien Enden der beiden Teile des Fadens an den ersten Enden der Doppelspirale zwei Anschlüsse zur elektrischen Versorgung (7a, 7b) des Fadens (6) umfassen, wodurch sie im Bereich eines gemeinsamen elektrischen Verbinders (7) im Bereich der Innenfläche (3-1) der Muffe Seite an Seite zusammengeführt werden können, **dadurch gekennzeichnet, dass** der spiralförmig gewickelte Widerstandsheizfaden sich im Bereich der stirnseitigen geraden Enden (3a', 3b`) der Muffe befindet.

2. Rohrförmige Verbindungsmuffe (3) nach Anspruch 1, **dadurch gekennzeichnet, dass**:
- die Muffe durch Verbinden mittels Schmelzschweißen, vorzugsweise Elektroschmelzschweißen, der Oberflächen der miteinander in Kontakt befindlichen Enden von wenigstens zwei rohrförmigen Muffenteilen gefertigt ist, die wenigstens umfassen:
• ein erstes rohrförmiges Muffenteil (10-1), umfassend ein durchgehendes Muffenteil (3c) und ein mittleres Muffenteil (3d) mit einem Außendurchmesser und vorzugsweise einem Innendurchmesser mit gegenüber dem Außendurchmesser bzw. vorzugsweise dem Innendurchmesser des benachbarten durchgehenden Teils (3c) reduzierter (reduzierten) Abmessung(en), wobei weiterhin vorzugsweise das erste rohrförmige Muffenteil (10-1) durch Bearbeiten einer rohrförmigen Muffe mit größerer Dicke erhalten wird, und
• wenigstens ein zweites rohrförmiges Muffenteil (10-2, 10-3), umfassend ein rohrförmiges Muffenendteil (3a, 3b), das vorzugsweise eine geringere Länge als das erste rohrförmige Teil in der axialen Richtung XX' der Muffe aufweist und das vorzugsweise eine zylindrische Innenfläche aufweist, und wobei weiterhin vorzugsweise das zweite Muffenteil (10-2) durch Formen erhalten wird, und
- die Enden von zwei zusammengefügten ersten und zweiten rohrförmigen Muffenteilen im Bereich ihres Kontaktbereiches identische oder ergänzende Formen aufweisen, wovon wenigstens eine der Oberflächen mit einem doppelspiralförmig gewickelten Widerstandsheizfaden bedeckt ist, dessen freie Enden auf die Innenfläche (3-1) des rohrförmigen Muffenteils münden.

3. Leitung (1) umfassend wenigstens zwei stumpf zusammengefügte Leitungselemente aus Stahl (1₁, 1₂) mit Innenauskleidung aus thermoplastischem Material (2), wovon die Enden der beiden Leitungselemente aneinander geschweißt (5) sind, wobei eine rohrförmige Verbindungsmuffe (3) nach einem der Ansprüche 1 oder 2 innerhalb der Leitung im Bereich der stumpf aneinanderstoßenden Enden der beiden Leitungselemente eingefügt ist, derart, dass die Endteile (3a, 3b) an den Enden der Muffe wenigstens teilweise in dichtem Kontakt (4-1) jeweils mit Endteilen (2a, 2b) an den Enden der Innenauskleidungen der beiden Leitungselemente sind, wobei der dichte Kontaktbereich (4-1) ein Schmelzschweißbereich zwischen den Materialien ist, die jedes Endteil (3a, 3b) der Muffe, das der doppelspiralförmige Heizfaden entlangläuft, bzw. jedes Endteil (2a, 2b) der Auskleidung bilden, welche in Kontakt miteinander sind, und dass der spiralförmig gewickelte Widerstandsheizfaden im Bereich der aneinander in Anschlag befindlichen stirnseitigen geraden Enden (2a'-2b', 3a'-3b') der Muffe und der Auskleidung gelegen ist.

4. Verfahren zur Herstellung einer Leitung nach Anspruch 3, welches die Schritte umfasst, bei denen:
1) das Zusammenfügen vollzogen wird von Leitungselementen (1₁, 1₂), die eine Auskleidung (2) mit einem Endteil reduzierter Dicke (2a, 2b) an jedem Ende sowie eine rohrförmige Verbindungsmuffe (3), die an nur einem Ende eines jeden Leitungselements (1₁, 1₂) eingefügt ist und dieses überragt, umfassen, wobei das Überstehen der Muffe ein Einsteckende (1₁b) eines jeden Leitungselements (1₁) definiert, das geeignet ist, mit einem muffenlosen Ende, das ein aufnehmendes Ende (1₂a) eines weiteren Leitungselements (1₂) definiert, dadurch zusammengefügt zu werden, dass das aufnehmende Ende (1₂a) ohne rohrförmige Verbindungsmuffe eines zu verbindenden Leitungselements (1₂) um das Einsteckende (1₁b), welches eine feste rohrförmige Verbindungsmuffe umfasst, die über das Endleitungselement (1₁) einer gerade zusammengefügten Leitung hinausragt, in axialer Längsrichtung (XX') soweit mit Kraft aufgesetzt und aufgesteckt wird, bis das Endteil (3a, 3b) der Muffe des Einsteckendes (1₁b) des Endleitungselements mit dem Endteil (2a, 2b) der Auskleidung des aufnehmenden Endes (1₂a) des zu verbindenden Leitungselements (1₂) in Kontakt ist, wobei jede Muffe an jedem der Endteile (3a, 3b) der Muffe einen doppelspiralförmig gewickelten Widerstandsheizfaden (6) umfasst, anschließend
2) der Heizfaden (6) mit Strom gespeist wird, vorzugsweise unter gleichzeitigem Ausüben eines Druckes des Muffenendteils auf das Auskleidungsendteil, welche in Kontakt miteinander sind, um einen Elektroschmelzschweißbereich (4-1) im Bereich wenigstens eines Teils der Schnittstelle der Oberflächen eines jeden Endteils (3a, 3b) der Muffe und jeden Endteils (2a, 2b) der Auskleidung, welche in Kontakt miteinander sind und welche die Doppelspirale des Heizfadens auf der Oberfläche der Muffe entlangläuft, zu bilden, um einen dichten Kontaktbereich durch Schmelzen (4-1) auszubilden, und
3) das Stumpfverschweißen (5) der Enden der beiden Leitungselemente vollzogen wird.

5. Verfahren nach Anspruch 4, **dadurch gekennzeichnet, dass**:
a) die Muffe in einem mittleren Teil (3d) einen Außendurchmesser aufweist, der kleiner als die Außendurchmesser der dem mittleren Teil (3d) benachbarten durchgehenden Teile (3c) ist, um einen ringförmigen Raum (8) zwischen der Muffe und der Wand der Leitungselemente auszubilden, und ein ringförmiges Wärmeschutzteil (9) angeordnet wird, das geeignet ist, die Muffe während des Verschweißens der Enden der Leitungselemente zu schützen, wobei die durchgehenden Teile (3c) der Muffe vorzugsweise einen Außendurchmesser aufweisen, der mit dem Innendurchmesser der nicht mit der Auskleidung überzogenen Enden der zusammengefügten Leitungselemente im Wesentlichen identisch ist, und
b) die rohrförmige Wand der Muffe eine Dicke aufweist, die in ihren benachbarten durchgehenden Teilen (3c) im Wesentlichen konstant ist und im Wesentlichen gleich der Dicke des durchgehenden Teils (2c) der Innenauskleidung (2) ist, und das mittlere Teil (3d) der Muffe, vorzugsweise mit reduzierter Dicke, geeignet ist, sich unter der Wirkung eines Innendrucks von wenigstens 1 MPa des innerhalb der in Betrieb befindlichen Leitung zirkulierenden Fluids zu verformen, um einen Innendurchmesser anzunehmen, der mit dem Innendurchmesser der restlichen Muffe im Wesentlichen identisch ist, und das Wärmeschutzteil (9) selbst auch vorzugsweise unter den gleichen Druckbedingungen verformbar ist, um eine Dicke von weniger als 5 mm, weiterhin bevorzugt von weniger als 2 mm anzunehmen, wobei das Wärmeschutzteil weiterhin vorzugsweise aus Keramikfasern besteht, und
c) der Druck auf die Innenfläche (3-1) der Muffe im Bereich ihres Endteils dadurch ausgeübt wird, dass in die Muffe eine Vorrichtung (20) eingeführt wird, die eine aufblasbare, anfangs wenigstens teilweise luftentleerte Zelle (22) umfasst, wobei vorzugsweise die Zelle an ihrer Oberfläche einen elektrischen Verbinder zur Stromversorgung (20a) aufweist oder hiermit zusammenwirkt, der derart positioniert wird, dass der elektrische Verbinder der Zelle (20a) mit dem elektrischen Verbinder (7) an der Innenfläche der Muffe, welcher die Anschlüsse (7a, 7b) des Heizfadens (6) einschließt, zusammenwirken kann, wenn die Zelle aufgeblasen wird, anschließend die Zelle aufgeblasen wird.

## Claims

1. A tubular junction sleeve of thermoplastic material suitable for being inserted inside a pipe (1) comprising at least two steel pipe elements (1₁, 1₂) that are internally lined with a thermoplastic material (2) where the ends of the two welded (5) together pipe elements are assembled end to end, said sleeve presenting at each end a tubular wall terminal portion (3a, 3b) of thickness that is smaller than the thickness of the adjacent running portion (3c) of the tubular wall of said sleeve, said sleeve (3) presenting a Joule effect heater wire (6), the wire being arranged in a spiral at the outer surface (3a'-3b') of said terminal portion (3a, 3b) of said sleeve, wherein said heater wire is folded (6c) on itself so as to form a double spiral (6a, 6b) made up of two wire portions (6a, 6b) arranged side by side forming two substantially equidistant spirals that are joined together at a common end constituted by a hairpin-bend (6c), each spiral traveling along said outer surface (3-2) of each terminal portion of the sleeve from the first end (6-1) of the spiral closest to the inner surface of the tubular wall of the sleeve towards a second end (6-2) of the spiral constituted by said common hairpin-bend (6c) end, said second end (6-2, 6c) of the spiral being closer to the outer surface (3-3) of the running portion (3c) of the sleeve adjacent to said terminal portion (3a, 3b) of the sleeve, the two non-spiral-wound free ends (6d-1, 6d-2) of the two portions (6a, 6b) of the wire at said first ends (6-1) of the two spirals joining the inner surface of the sleeve, said two free ends of the two portions of the wire at said first ends of the double spiral comprise two electrical power supply terminals (7a, 7b) of said wire (6) and thus being capable of being united side by side with a common electrical connector (7) at the inner surface (3-1) of the sleeve, **characterized in that** said spiral-wound wire for Joule effect heating is situated at the right frontal ends (3a', 3b') of said sleeve.

2. A tubular junction sleeve (3) according to claim 1, **characterized in that**:
· said sleeve is made by assembling together by fusion, preferably by electrofusion, surfaces at the mutually-contacting ends of at least two tubular portions of said sleeve comprising at least:
· a first tubular sleeve portion (10-1) having a running sleeve portion (3c) and a central sleeve portion (3d), the central sleeve portion being of outside diameter, and preferably also of inside diameter, that are of dimension(s) smaller than the outside diameter, and preferably also respectively the inside diameter, of the adjacent running portion (3c), more preferably said first tubular sleeve portion (10-1) being obtained by machining a tubular sleeve of greater thickness; and
· at least one second tubular sleeve portion (10-2, 10-3) having a terminal tubular sleeve portion (3a, 3b) preferably presenting a length that is shorter than said first tubular portion in the axial direction XX' of the sleeve, and preferably presenting a cylindrical inner surface, and more preferably said second sleeve portion (10-2) being obtained by molding; and
· the ends of said first and second assembled together tubular sleeve portions presenting shapes that are identical or complementary in their contact zone, with at least one of said surfaces being covered by a said Joule effect heater wire wound in a double spiral and having its free ends leading to the inner surface (3-1) of said tubular sleeve portion.

3. A pipe (1) comprising at least two steel pipe elements (1₁, 1₂) internally lined with thermoplastic material (2) and assembled end to end, the ends of two pipe elements being welded (5) together, wherein a said tubular junction sleeve (3) according to claim 1 or claim 2 is interposed inside the pipe at the abutting ends of the two pipe elements so that the terminal portions (3a, 3b) at the ends of said sleeve are at least in part in leaktight contact (4-1) with the respective terminal portions (2a, 2b) at the ends of said internal linings of the two pipe elements, said leaktight contact zone (4-1) being a zone of fusion-welding between the materials constituting each of said terminal portions (3a, 3b) of the sleeve carrying said heater wire in a double spiral and each of said respective terminal portions (2a, 2b) of said lining in contact therewith, and said spiral-wound wire for Joule effect heating is situated at right frontal ends (2a'-2b', 3a'-3b') of said sleeve and of said lining in abutment one against the other.

4. A method of making a pipe according to claim 3, comprising the following steps:
1) assembling together pipe elements (1₁, 1₂) including a said lining (2) with a terminal portion (2a, 2b) of smaller thickness at each end, and a said tubular junction sleeve (3) inserted into only one end of each said pipe element (1₁, 1₂) and projecting therefrom, the projecting sleeve defining a male end (1₁b) for each pipe element (1₁) suitable for being assembled with an end not having a said sleeve and defining a female end (1₂a) of another said pipe element (1₂) by axially engaging and forcing in the longitudinal direction (XX') said female end (1₂a) not having a tubular junction sleeve of a pipe element for assembly (1₂) around the male end (1₁b) having a tubular junction sleeve fastened thereto that projects from the terminal pipe element (1₁) of a pipe that is being assembled, until said terminal portion (3a, 3b) of the sleeve of said male end (1₁b) of said terminal pipe element is in contact with said terminal portion (2a, 2b) of the lining of said female end (1₂a) of said pipe element (1₂) for assembly, each said sleeve including on each of said terminal portions (3a, 3b) of the sleeve a said Joule effect heater wire (6) wound in a double spiral, then
2) electrically powering said heater wire (6), preferably while simultaneously exerting pressure between said contacting sleeve terminal portion and said lining terminal portion in order to provide a said zone (4-1) for welding by electrofusion in at least a portion of the interface at the surfaces of each said sleeve terminal portion (3a, 3b) and each said lining terminal portion (2a, 2b) in mutual contact and having the heater wire double spiral running thereover at the surface of the sleeve in order to provide a said zone (4-1) of leaktight contact by fusion; and
3) welding together (5) the ends of the two abutting pipe elements.

5. A method according to claim 4, **characterized in that**:
a) in a central portion (3d), said sleeve presents an outside diameter that is less than the outside diameters of the running portions (3c) adjacent to said central portion (3d) so as to leave an annular space (8) between the sleeve and the wall of said pipe elements, and an annular thermal protection part (9) is placed therein suitable for protecting the sleeve while the ends of the pipe elements are being welded together, said running portions (3c) of the sleeve preferably presenting an outside diameter that is substantially identical to the inside diameter of the ends of the assembled-together pipe elements that are not covered by said lining; and
b) the tubular wall of said sleeve presents thickness that is substantially constant in its said adjacent running portions (3c) and substantially equal to the thickness of the running portion (2c) of said internal lining (2), and said central portion (3d) of the sleeve, which is preferably of smaller thickness, is suitable for deforming so as to adopt an inside diameter that is substantially identical to the inside diameter of the remainder of the sleeve under the effect of an internal pressure of at least 1 MPa of the fluid that flows inside the pipe in operation, and the thermal protection part (9) is itself also deformable under the same pressure conditions preferably so as to adopt a thickness of less than 5 mm, and more preferably of less than 2 mm, said thermal protection part more preferably being constituted by ceramic fibers; and
c) said pressure is exerted against the inner surface (3-1) of the sleeve at its said terminal portion by inserting a device (20) comprising an inflatable cell (22) inside the sleeve, said cell initially being at least partially deflated, and preferably including or cooperating at its surface with an electrical power supply connector (20a) that is positioned in such a manner that said electrical connector of the cell (20a) can cooperate, when said cell is inflated, with the electrical connector (7) on the inner surface of the sleeve and including the terminals (7a, 7b) of the heater wire (6), and then inflating said cell.
